# EUROPÄISCHE PATENTSCHRIFT

(11) **EP 2 535 241 B1**
(45) Veröffentlichungstag und Bekanntmachung des Hinweises auf die Patenterteilung: **10.04.2019**
(21) Anmeldenummer: 12000853.7
(22) Anmeldetag: 10.02.2012
(51) Int. Cl.: B62D 21/02, B62D 27/02, B62D 63/02

(54) **Rahmenlängsträgeraufbau für Fahrgestellrahmen von Nutzfahrzeugen, insbesondere von Lastkraftwagen und/oder Bussen**
Frame support structure for chassis frames of commercial vehicles, in particular heavy duty vehicles and/or buses
Structure de longeron pour châssis de véhicules utilitaires, notamment de camions et/ou de bus

(30) Priorität: 17.06.2011 DE 102011104483
(43) Veröffentlichungstag der Anmeldung: 19.12.2012
(73) Patentinhaber: MAN Truck & Bus AG, 80995 München (DE)
(72) Erfinder: Burger, Norbert, 84030 Ergolding (DE); Übelacker, Andreas, 82281 Egenhofen (DE); Boog, Harald, 38159 Vechelde (DE); Stecher, Ferdinand, 4400 Steyr (AT); Butscher, Jochen, 69488 Birkenau (DE)
(74) Vertreter: Liebl, Thomas

(56) Entgegenhaltungen:
- EP-A1- 1 508 508
- EP-A1- 2 295 312
- DE-A1- 19 523 498
- DE-A1-102009 021 964
- DE-C1- 19 733 470
- US-A- 2 002 851
- US-B1- 6 299 210

## Beschreibung

Die Erfindung betrifft einen Rahmenlängsträgeraufbau für Rahmengestellrahmen von Nutzfahrzeugen, insbesondere von Lastkraftwagen und/oder Bussen, nach dem Oberbegriff des Anspruchs 1. Ferner betrifft die Erfindung ein Verfahren zur Herstellung eines Rahmenlängsträgers für einen Rahmenlängsträgeraufbau nach dem Oberbegriff des Anspruchs 23.

Fahrzeugfahrgestelle, insbesondere Nutzfahrzeugfahrgestelle, lassen sich nach Anordnung und Funktion in die vier wesentlichen Baugruppen Fahrgestellrahmen, Fahrerhaus, Fahrwerk und Antriebsstrang gliedern. Hierbei stellt der Fahrgestellrahmen die zentrale tragende Baugruppe des Fahrgestells dar, an der sowohl Baugruppen des Fahrwerks als auch der Aufbau befestigt sind. Das Gleiche gilt für Busse, sofern sie nicht, wie heute meist üblich, ein selbsttragendes Gerippe haben.

Im Nutzfahrzeugbau werden üblicherweise insbesondere für Lastkraftwagen, Busse, Anhänger und/oder Auflieger, die erst in einem späteren Montageschritt ihren Aufbau erhalten, sogenannte volltragende Fahrgestellrahmen verwendet.

Die unterschiedlichen Rahmenkonzeptionen unterscheiden sich durch den Rahmengrundriss, also die Anordnung der tragenden Teile zueinander, und den Profilquerschnitt bzw. der Querschnittsform der tragenden Elemente. Übliche Fahrgestellrahmen werden als Leiterrahmen ausgebildet, die in jedem Fall biegesteif und in Abhängigkeit der Form der Profilquerschnitte entweder torsionsweich oder torsionssteif sind. Bei torsionsweichen Fahrgestellrahmen bestehen Längs- und Querträger aus offenen Profilen. Im Vergleich zu den offenen Profilen sind geschlossene Profile mit in etwa vergleichbaren Hauptabmessungen um ein Vielfaches torsionssteifer. Die Wahl des geeigneten Profils richtet sich hierbei vor allem nach dem Einsatzzweck des Fahrzeugs, ob es beispielsweise im Gelände oder auf der Straße genutzt werden soll und der Torsionssteifigkeit des Aufbaus bzw. der Nachgiebigkeit der Aufbaubefestigung.

Zum weitaus überwiegenden Teil werden Nutzfahrzeugfahrgestelle als verwindungsweiche Leiterrahmen aus C- bzw. U-förmigen (nachfolgend durchgehend als C-förmig bezeichnet) Rahmenlängsträgern mit stehendem Steg als Mittelsteg ausgeführt. Damit die Einleitung der Vertikalkräfte über den Aufbau und die Aufbaukonsolen bzw. das Fahrwerk und die entsprechenden Lagerböcke in den Fahrgestellrahmen in der Nähe des Schubmittelpunktes erfolgt, werden die Rahmenlängsträger regelmäßig mit der Öffnung nach innen angeordnet. Unter den derzeit eingesetzten Fahrgestellen sind Fahrgestellrahmen bekannt, die entweder über gerade Längsträgerprofile mit durchgehend konstantem bzw. gleichem Querschnitt oder aber über horizontal oder vertikal gekröpfte Profile, teilweise sogar mehrfach gekröpfte Profile, verfügen. Die Herstellung derartiger Rahmenlängsträger erfolgt regelmäßig in speziellen Fertigungsstätten, bei denen das Ausgangsmaterial von einer sogenannten Coil bzw. Spule abgewickelt wird, anschließend zu Platinen geschnitten und gelocht wird, bevor es dann in der Presse zu einem Umformen, Knicken und Biegen der Rahmenlängsträger in ihre endgültige Form kommt. Der Aufwand zur Herstellung der herkömmlichen Rahmenlängsträger ist daher stets sehr aufwändig und kostenintensiv und kann nur in Spezialbetrieben erfolgen, die über Großpressen von bis zu 50.000kN oder mehr Presskraft verfügen und die zudem modernste Profilieranlagen zum Rollen bzw. Umbiegen der Längsträger aufweisen.

Neben den klassischen Rahmenlängsträgern, die jeweils über Ober- und Untergurte sowie einen die beiden Gurte verbindenden vertikal angeordneten Steg bzw. Mittelsteg verfügen, sind beispielsweise aus der DE 10 2007 056 404 A1 Rahmenlängsträger eines Fahrgestellrahmens bekannt, die durch zwei in Fahrzeuglängsrichtung verlaufende Schienen gebildet werden, die in vertikaler Richtung durch geeignete unterschiedlich ausgebildete bzw. unterschiedlich gebogene und gekröpfte Verbindungselemente miteinander verbunden sind. Die beiden Schienen, die in diesem Fall den Ober- bzw. Untergurt des Rahmenlängsträgers bilden, sind jeweils U-förmig ausgeführt, wobei die Öffnungen der vertikal übereinander angeordneten Schienen einander zugewandt sind. In den Öffnungen, also im Bereich zwischen den Schenkeln der Schienen, sind jeweils Befestigungsflächen vorgesehen, an denen die vertikal verlaufenden Verbindungselemente angeschweißt werden. Ein derartiger Aufbau ist herstellungs- und fertigungstechnisch sehr aufwändig und erfordert eine Vielzahl von unterschiedlichsten Bauteilen, die einen enormen Kostenpunkt darstellen. Insgesamt handelt es sich somit hierbei um einen modularen Aufbau der Rahmenlängsträger, der sehr aufwändig und damit insgesamt wenig praktikabel ist.

Ferner ist aus der US 2007/0194564 A1 ein Leiterrahmen für einen Fahrzeuganhänger bekannt, bei dem die Rahmenlängsträger jeweils durch sich im Wesentlichen über die gesamte Länge des Rahmenlängsträgers erstreckende, geradlinig und ungekröpft verlaufende Basisprofile mit einem flächigen, plattenförmigen Mittelsteg gebildet sind, auf dessen gegenüberliegende freie Enden jeweils ein Schenkelelement aufgesetzt und aufgeklemmt ist, das beidseitig des Mittelstegs einen offenen C-förmigen Profilbereich ausbildet, in dem die querverlaufenden Rahmenelemente des Leiterrahmens aufgenommen und eingesetzt werden. Die Verbindung der aufgesetzten Profilelemente erfolgt mittels einer Nietverbindung.

Weiter ist aus der DE 10 2009 041 050 A1 ein Rahmenlängsträger eines Nutzfahrzeuges bekannt, bei dem der Ober- und Untergurt jeweils als geschlossenes Hohlprofil ausgebildet ist, wobei sowohl vom Ober- als auch vom Untergurt jeweils eine Befestigungslasche in Richtung auf den jeweils anderen Gurt hin abragt, welche Lasche zur Anbindung mehrerer in Rahmenlängsträgerrichtung voneinander beabstandeter Verbindungselemente dient. Mit einem derartigen modularen Rahmenlängsträgeraufbau soll Gewicht eingespart werden und zudem eine flexible Anpassung des Rahmenlängsträgeraufbaus an unterschiedlichste Fahrzeugtypen möglich sein.

Des Weiteren ist es allgemein bekannt, ein sogenanntes geteiltes Tragwerk als Fahrgestellrahmen zur Verfügung zu stellen, bei dem im vorderen Fahrzeugbereich, also dort, wo die Aggregate verbaut werden und das Fahrerhaus angeordnet ist, der Fahrgestellrahmen links- und rechtsseitig jeweils einen Rahmenlängsträger aufweist, die mit einem Z-Profilquerschnitt ausgebildet sind. An diesem Z-Profilquerschnitt schließt sich nach hinten zum hinteren Rahmenteil hin ein Rahmenlängsträger-Bauteil an, das eine herkömmliche C-Form als Profilquerschnitt aufweist. Das C-förmige hintere Rahmenteil wird dabei mit dem Z-förmigen vorderen Rahmenteil aufwendigste mit einer Vielzahl von Schraubverbindungen verschraubt.

Demgegenüber ist es Aufgabe der vorliegenden Erfindung, einen Rahmenlängsträgeraufbau für Fahrgestellrahmen von Nutzfahrzeugen, insbesondere von Lastkraftwagen und/oder Bussen, zur Verfügung zu stellen, der einen modular aufgebauten Rahmenlängsträger aufweist, der es ermöglicht, den Fahrgestellrahmen insgesamt flexibel an unterschiedlichste Fahrzeugtypen anzupassen, der des Weiteren eine kraftflussgerechte Konstruktion mit optimierten Profilquerschnitten ermöglicht und darüber hinaus zudem ein erhebliches Gewichtseinsparungspotential zur Verfügung stellt. Des Weiteren ist es Aufgabe der vorliegenden Erfindung, ein Verfahren zur Herstellung eines Rahmenlängsträgers bzw. eines Rahmenlängsträgeraufbaus für Fahrgestellrahmen von Nutzfahrzeugen, insbesondere von Lastkraftwagen und/oder Bussen, zur Verfügung zu stellen, das fertigungstechnisch einfach und kostengünstig ist.

Die Lösung dieser Aufgabe gelingt mit den Merkmalen der unabhängigen Patentansprüche. Vorteilhafte Ausgestaltungen hierzu sind jeweils Gegenstand der darauf rückbezogenen Unteransprüche.

Gemäß Anspruch 1 wird ein Rahmenlängsträgeraufbau für Fahrgestellrahmen von Nutzfahrzeugen, insbesondere von Lastkraftwagen und/oder Bussen, vorgeschlagen, der wenigstens einen sich im montierten Zustand in Fahrzeuglängsrichtung erstreckenden modular aufgebauten Rahmenlängsträger aufweist, wobei der Rahmenlängsträger ein sich im Wesentlichen über die gesamte Länge des Rahmenlängsträgers erstreckendes Basisprofil mit einem plattenförmigen und im Querschnitt betrachtet zwischen gegenüberliegenden Rahmenlängsträgerbereichen, insbesondere zwischen einem Obergurt- und einem Untergurtbereich des Rahmenlängsträgers, erstreckenden Mittelsteg aufweist, welcher Mittelsteg in Basisprofil-Längserstreckungsrichtung gesehen geradlinig verläuft und an welchem Mittelsteg durch separate Bauteile gebildete Ergänzungsprofile in einer flächigen Anlageverbindung angebunden sind. Erfindungsgemäß wird vorgeschlagen, dass mehrere Ergänzungsprofile so am geradlinig und über die gesamte Länge des Rahmenlängsträgers verlaufenden Mittelsteg des Basisprofils angebunden sind, dass in Längsträger-Erstreckungsrichtung wenigstens zwei Rahmenlängsträgerbereiche mit einem unterschiedlichen Rahmenlängsträger-Profilquerschnitt ausgebildet sind.

Mit einem derartigen erfindungsgemäßen modularen Aufbau kann zum Beispiel auf der Basis eines einzigen Basisprofils mit einem im wesentlichen durchgehend konstanten bzw. gleichen Profilquerschnitt eine über die gesamte Rahmenlängsträger-Erstreckungsrichtung genau an den jeweiligen Belastungsfall angepasste Profilquerschnittsgeometrie zur Verfügung gestellt werden, die das jeweils benötigte Flächenträgheitsmoment bzw. die jeweils benötigte Verwindungssteifigkeit in optimierter Weise genau dort zur Verfügung stellt, wo es der jeweilige Belastungsfall erfordert, so dass eine maßgeschneiderte Rahmenlängsträgerausgestaltung ermöglicht wird, die Überdimensionierungen vermeidet, wobei der Mittelsteg zudem eine gerade flächige Anbindungsmöglichkeit für die Ergänzungsprofile zur Verfügung stellt. Das heißt, dass zum Beispiel ausgehend von einem Basisprofil mit einem definierten Querschnitt und einer definierten Wandstärke die Ergänzungsprofile so angeordnet und angebaut werden können, dass diese zum Beispiel gegenüber dem Basisprofil unterschiedliche Material- bzw. Wandstärken aufweisen und/oder aus einem anderen Werkstoff gebildet sind, zum Beispiel aus einem Leichtmetall, um Gewicht einzusparen, gebildet sind. Zudem können mit einem derartigen erfindungsgemäßen modularen Konzept aus Basisprofil und unterschiedlichen Ergänzungsprofilen Rahmenlängsträgeraufbauten realisiert werden, bei denen sich, zum Beispiel bezogen auf gleiche Rahmenlängsträgerbereiche an unterschiedlichen Fahrzeugtypen, unterschiedliche Querschnittsprofile auf einfache Weise realisieren lassen, insbesondere auch dadurch, dass die Ergänzungsprofile, bezogen auf unterschiedliche Fahrzeugtypen, zum Beispiel auf unterschiedlichen Höhen in Vertikalrichtung gesehen angeordnet werden können, wobei zum Beispiel der Profilquerschnitt selbst, zum Beispiel ein Z-Profilquerschnitt, im Übrigen beibehalten wird.

Zudem kann mit der erfindungsgemäßen Lösung sichergestellt werden, dass die Rahmenlängsträger mit einer insgesamt geringeren Wand- bzw. Materialstärke hergestellt werden können als dies bei den gekröpften, gebogenen herkömmlichen Rahmenlängsträgeraufbauten der Fall ist, bei denen eine Wandstärke von vorne bis hinten durchgehalten wird und zu bereichsweise erheblichen Überdimensionierungen führt. Die erfindungsgemäß möglichen dünneren Wandstärken haben zudem den Vorteil, dass bei derartigen dünneren Wandstärken auch kleinere Biegeradien, zum Beispiel in Verbindung mit dem Umbiegevorgang, wie beispielsweise dem Rollen, Biegen oder Walzen, zur Ausbildung der Profilschenkel der einzelnen Bauteile vorgesehen werden können, wodurch sich kürzere Längen der Profilschenkel erzielen lassen und damit entsprechend größere Vertikallängen im Bereich des Mittelsteges erzielt werden können, was zum Beispiel für die großflächige Anlageverbindung der Ergänzungsprofile von Vorteil ist und mehr konstruktiven Freiraum bezüglich der Anbindung von Bauteilen insgesamt mit sich bringt. Die Herstellung der Rahmenlängsträgerbauteile kann zudem fertigungstechnisch auch in weniger technisch hochgerüsteten Walzwerken durchgeführt werden, so dass hierdurch der Herstellungs- und Fertigungsaufwand erheblich reduziert werden kann.

An dieser Stelle sei ausdrücklich erwähnt, dass der Mittelsteg bzw. das Basisprofil bevorzugt zwar einen in Längsrichtung grundsätzlich durchgehend konstanten bzw. gleichen Profilquerschnitt aufweist, um an den Anbindungsbereichen der Ergänzungsprofile eine flächige Anbindungsmöglichkeit für eben die Ergänzungsprofile zur Verfügung zu stellen, dass jedoch das Basisprofil bzw. insbesondere der Mittelsteg selbstverständlich auch mit sickenartigen Versteifungen, Ausbauchungen etc. sowie mit Ausnehmungen, Materialdopplungen und/oder Schraublöchern, etc. versehen sein kann, falls dies erforderlich sein sollte. Dies erfolgt dann selbstverständlich bevorzugt außerhalb der Anbindungsbereiche der Ergänzungsprofile und steht nicht im Widerspruch zum erfindungsgemäßen Grundgedanken, gemäß dem ein Basisprofil als Ausgangspunkt dient, um, bezogen auf unterschiedlichste Fahrzeugtypen von Nutzfahrzeugen und/oder bezogen auf unterschiedlichste Einsatz- bzw. Anwendungsfälle, jeweils über die Rahmenlängsträger-Erstreckungsrichtung gesehen unterschiedliche und genau auf den jeweiligen Einsatzfall hin optimierte Rahmenlängsträger-Profilquerschnitte dadurch zur Verfügung zu stellen, dass das Basisprofil mit entsprechend vorgehaltenen und eine definierte Querschnittsprofilgeometrie aufweisenden Ergänzungsprofilen produktionstechnisch und fertigungstechnisch einfach kombiniert werden können.

Erfindungsgemäß ist eine konkrete Ausführungsform vorgesehen, bei der wenigstens der Mittelsteg des sich in Rahmenlängsträgerrichtung erstreckenden Basisprofils ohne eine Kröpfung (ungekröpft bzw. kröpfungsfrei), in Hochachsenrichtung des Rahmenlängsträgers, gesehen und ohne einen Knick (ungeknickt bzw. knickfrei), quer zur Rahmenlängsträgerrichtung gesehen, ausgebildet ist. Fertigungstechnisch besonders vorteilhaft ist bevorzugt das gesamte Basisprofil als ungekröpftes und/oder ungeknicktes und damit in Rahmenlängsträgerrichtung geradlinig verlaufendes, einfaches Profilbauteil ausgebildet. Damit können die Rahmenlängsträger somit insgesamt einfach ohne aufwendiges Kröpfen und Biegen hergestellt werden, da die Ergänzungsprofile so ausgewählt werden können, dass sich die gewünschten bereichsweise unterschiedlichen Rahmenlängsträgerbereiche auch ohne ein Kröpfen und Knicken der Basisprofile ausbilden lassen. Wie bereits zuvor ausgeführt wird hierbei unter einem Kröpfen eine Umbiegung oder Abkantung in Hochachsenrichtung verstanden, während unter einem Knicken eine Umbiegung oder Abkantung quer zur Rahmenlängsträgerrichtung verstanden wird.

Besonders bevorzugt weist somit wenigstens der Mittelsteg des Basisprofils, bevorzugt das gesamte Basisprofil, einen in Längserstreckungsrichtung gesehen grundsätzlich durchgehend gleichen Profilquerschnitt auf, was aber nicht ausschließt, wie zuvor bereits erwähnt, dass der Mittelsteg, vorzugsweise außerhalb des Anbindungsbereiches der Ergänzungsprofile, an definierten Stellen mit wenigstens einer sickenartigen Versteifung und/oder Ausbuchtung und/oder mit wenigstens einer Ausnehmung versehen ist.

Das Basisprofil, vorzugsweise ein sich im Wesentlichen über die gesamte Länge des Rahmenlängsträgers erstreckendes, geradlinig und ungekröpft verlaufendes Basisprofil, ist bevorzugt einteilig, insbesondere materialeinheitlich und/oder einstückig, ausgebildet, da sich dadurch der Bauteil- und damit auch der Fertigungsaufwand erheblich reduzieren lässt.

Wie bereits zuvor angedeutet, können diese Ergänzungsprofile auf unterschiedliche Weise am Basisprofil befestigt werden. Zum Beispiel können Ergänzungsprofile auf quer zur Rahmenlängsträgerrichtung gesehen derselben Seite oder auf unterschiedlichen Seiten des Mittelsteges des Basisprofils in einer flächigen Anlageverbindung angebunden sein. Alternativ oder zusätzlich können Ergänzungsprofile in unterschiedlichen Höhen an dem Mittelsteg des Basisprofils in einer flächigen Anlageverbindung angebunden sein. Weiter können Ergänzungsprofile alternativ oder zusätzlich, bezogen auf die Ergänzungsprofil-Längserstreckungsrichtung und die Basisprofil-Längserstreckungsrichtung, um einen definierten Winkel versetzt zueinander in einer flächigen Anlageverbindung an dem Mittelsteg des Basisprofils angebunden sein, um zum Beispiel mit geradlinigen Profilbauteilen einen Rahmenlängsträgerbereich auszubilden, der einem auf herkömmliche Weise durch Kröpfen und/oder Knicken hergestellten Rahmenlängsträgerbereich entspricht. Es versteht sich, dass die Ergänzungsprofile jeweils lediglich eine solche Längserstreckung in Rahmenlängsträgerrichtung aufweisen, wie dies für die Ausbildung eines gewünschten Profilquerschnitts im jeweiligen Rahmenlängsträgerbereich erforderlich ist, so dass die Ergänzungsprofile regelmäßig kürzer ausgebildet sein werden als das diesen zugeordnete Basisprofil. Die flächige Anlageverbindung stellt dabei eine besonders stabile Anbindung dar, die es ermöglicht, die Kraft ohne unerwünschte Kraftspitzen in den jeweiligen Rahmenlängsträgerbereich einzuleiten.

Gemäß einer besonders bevorzugten Ausgestaltung mit Bezug auf die konkrete Ausbildung der Ergänzungsprofile wird vorgeschlagen, dass wenigstens der an dem Mittelsteg des Basisprofils angebundene Profilschenkel der Ergänzungsprofile ohne eine Kröpfung in Hochachsenrichtung und/oder ohne Knick quer zur Rahmenlängsträgerrichtung ausgebildet ist, bevorzugt das gesamte Ergänzungsprofil als ungekröpftes und/oder ungeknicktes und damit geradlinig verlaufendes Profilbauteil ausgebildet ist. Damit lässt sich, wie bereits zuvor in Verbindung mit dem Basisprofil dargestellt, der fertigungstechnische Aufwand wiederum erheblich reduzieren und kann durch entsprechende Ausbildung und Auswahl der Ergänzungsprofile dennoch jeder gewünschte Rahmenlängsträgerquerschnitt entlang des Rahmenlängsträgers realisiert werden, und zwar, wie ebenfalls bereits erörtert, in unterschiedlicher Weise entlang des Rahmenlängsträgers.

Auch hier kann wiederum konkret vorgesehen sein, dass wenigstens der an dem Mittelsteg des Basisprofils angebundene Profilschenkel des jeweiligen Ergänzungsprofils, bevorzugt das gesamte Ergänzungsprofil, einen in Längserstreckungsrichtung gesehen grundsätzlich durchgehend gleichen Profilquerschnitt aufweist, was aber nicht ausschließt, wie zuvor bereits erwähnt, dass das Ergänzungsprofil, vorzugsweise außerhalb des Anbindungsbereiches am Mittelsteg des Basisprofils, an definierten Stellen mit wenigstens einer sickenartigen Versteifung und/oder Ausbuchtung und/oder mit wenigstens einer Ausnehmung versehen ist.

Gemäß einer besonders bevorzugten konkreten Ausgestaltung wird vorgeschlagen, dass das Basisprofil einen solchen Profilquerschnitt mit wenigstens einem, wenigstens abschnittsweise von dem Mittelsteg winklig abragenden Profilschenkel aufweist, der mittels der Ergänzungsprofile zu einem eine Z-Form und eine C-Form einschließenden oder aufweisenden Profilquerschnitt ergänzbar ist. Besonders bevorzugt ist hierbei ein Aufbau, bei dem das Basisprofil wenigstens in einem, bezogen auf die Fahrtrichtung, frontseitigen oder heckseitigen Längsträgerrahmenbereich mit wenigstens einem Ergänzungsprofil, insbesondere mit einem einzigen Ergänzungsprofil zu einem eine Z-Form einschließenden oder aufweisenden Profilquerschnitt ergänzt ist und/oder bei dem das Basisprofil wenigstens in einem, bezogen auf die Fahrtrichtung, frontseitigen oder heckseitigen Längsträgerrahmenbereich mit wenigstens einem Ergänzungsprofil, insbesondere einem einzigen Ergänzungsprofil, zu einem Rahmenlängsträger mit einem eine C-Form einschließenden oder aufweisenden Profilquerschnitt, bevorzugt mit im montierten Zustand in Fahrzeugquerrichtung nach innen weisenden Profilschenkeln, ergänzt ist. Dadurch wird ein Rahmenlängsträgeraufbau zur Verfügung gestellt, der in Verbindung mit Nutzfahrzeugen, insbesondere mit Lastkraftwagen und hier insbesondere mit schweren Lastkraftwagen, vorteilhaft auf die Anordnung von Fahrerhaus, Fahrwerk und Antriebsstrang bzw. Aufbauten optimiert ausgelegt ist und zum Beispiel im vorderen Bereich eine Fischbauchgeometrie ohne Knickung und Kröpfung des Rahmenlängsträgers bzw. des Basisprofils und/oder der Ergänzungsprofile zur Verfügung stellt, während zum Beispiel der hintere, heckseitige Bereich die übliche C-Form mit nach innen weisenden Profilschenkeln als Ober- und Untergurte aufweisen kann.

Die Begrifflichkeit "einschließender Profilquerschnitt" bedeutet dabei, dass zum Beispiel in Verbindung mit einem zum Beispiel eine C-Form einschließenden Profilquerschnitt hiervon auch Querschnittsgeometrien umfasst sein können, die zum Beispiel eine E-Form aufweisen, da in dieser E-Form auch eine C-Form vorhanden ist. Analoges gilt für sämtliche anderen mit der Begrifflichkeit "Einschließen" umschriebenen Profilquerschnitte.

Das heißt mit anderen Worten, dass das Basisprofil einen grundsätzlich beliebigen Profilquerschnitt aufweisen kann, zum Beispiel einen L-förmigen oder C-förmigen oder E-förmigen oder sogar einen T-förmigen Profilquerschnitt, während zum Beispiel die Ergänzungsprofile einen, bezogen auf die Ergänzungsprofile und/oder auf das Basisprofil, gleichen oder unterschiedlichen Profilquerschnitt aufweisen und/oder einen L- oder C- oder E-förmigen Profilquerschnitt aufweisen können. Zum Beispiel könnte vorgesehen sein, dass das im Querschnitt C- oder E-förmige Basisprofil in einem, bezogen auf die Fahrtrichtung, frontseitigen Längsträgerrahmenbereich mit wenigstens einem Ergänzungsprofil zu einem eine Z-Form einschließenden oder aufweisenden Profilquerschnitt ergänzt ist. Alternativ dazu könnte vorgesehen sein, dass das im Querschnitt T-förmige Basisprofil in einem, bezogen auf die Fahrtrichtung, frontseitigen Längsträgerrahmenbereich mit wenigstens einem Ergänzungsprofil zu einem eine Z-Form einschließenden oder aufweisenden Profilquerschnitt und in einem, bezogen auf die Fahrtrichtung, heckseitigen Längsträgerrahmenbereich mit wenigstens einem Ergänzungsprofil zu einem eine C-Form einschließenden oder aufweisenden Profilquerschnitt ergänzt ist. Hierbei ergeben sich jedoch insbesondere in Verbindung mit zusätzlichen, gegebenenfalls an der jeweiligen Rahmenlängsträgerstelle nicht benötigten Profilschenkeln Rahmenlängsträgeraufbauten, die einen gegebenenfalls erhöhten Materialaufwand bewirken, was sich kostentechnisch nachteilig auswirken kann.

Dementsprechend ist gemäß einer besonders bevorzugten konkreten erfindungsgemäßen Lösung vorgesehen, dass das Basisprofil einen L-förmigen Querschnitt aufweist, da sich hierdurch, insbesondere in Verbindung mit einem zum Beispiel ebenfalls einen L-förmigen Querschnitt aufweisenden Ergänzungsprofil, die regelmäßig gewünschten und erforderlichen Z- bzw. C-Profilquerschnitte an den unterschiedlichsten Stellen des Rahmenlängsträgers in Rahmenlängsträger-Erstreckungsrichtung gesehen ausbilden lassen. Zudem bildet der vom Mittelsteg wegragende Profilschenkel dann bereits, je nach Einbaulage, wenigstens einen Teilbereich des regelmäßig vorhandenen Obergurtes und/oder Untergurtes aus. Besonders bevorzugt ist ein konkreter Aufbau, bei dem das Basisprofil und/oder das Ergänzungsprofil einen L-förmigen Querschnitt aufweisen, da dann grundsätzlich Gleichteile verwendet werden können.

Gemäß einer weiteren besonders bevorzugten Ausführungsform ist vorgesehen, dass Ergänzungsprofile einander in einem zwischen dem frontseitigem und dem heckseitigen Längsträgerrahmenbereich liegenden mittleren Längsträgerrahmenbereich, in Rahmenlängsträgerrichtung gesehen, wenigstens bereichsweise überlappen, bevorzugt auf gegenüberliegenden Seiten des Mittelsteges wenigstens bereichsweise überlappen. Eine derartige Überlappung in Rahmenlängsträger-Längsrichtung ermöglicht einen sanften Übergang im Hinblick auf die Festigkeit des Rahmenlängsträgers in diesem Bereich.

In diesem Zusammenhang ist es weiter besonders vorteilhaft, dass die auf gegenüberliegenden Seiten des Mittelsteges angebundenen Ergänzungsprofile den Mittelsteg in Hochachsenrichtung gesehen nach oben oder unten dergestalt überragen, dass die Ergänzungsprofile im Überlappungsbereich der Ergänzungsprofile mit jeweils einem ihrer Profilschenkel in einer flächigen Anlageverbindung aneinander anliegen und/oder dass die weiteren Profilschenkel der Ergänzungsprofile in bezogen auf den Mittelsteg entgegengesetzte Richtung weisen. Durch die flächige Anlage der das Basisprofil überragenden Ergänzungsprofile im Überlappungsbereich wird auf einfache Weise eine besonders stabile Anbindung der Ergänzungsprofile am Basisprofil sichergestellt, so dass der Rahmenlängsträger in diesem Bereich kraftflusstechnisch optimiert gestaltet ist und hohe Festigkeits- und Trägheitsmomentwerte aufweist, die insbesondere dann von Vorteil sind, wenn der Überlappungsbereich in einem besonders hoch beanspruchten Bereich des Fahrgestellrahmens bzw. des Rahmenlängsträgeraufbaus des Fahrgestellrahmens zum Liegen kommt. Es versteht sich, dass die auf gegenüberliegenden Seiten liegenden Ergänzungsprofile dabei sowohl in etwa auf gleicher Höhe angeordnet sein können, um zum Beispiel in Verbindung mit einem L-Profilquerschnitt der Ergänzungsprofile dann in diesem Überlappungsbereich ein oberes T-Profil auszubilden. Genauso gut können die Ergänzungsprofile aber auch im Hinblick auf die vom Mittelsteg abragenden Profilschenkel auf unterschiedlichen Höhen, bezogen auf die Vertikalrichtung, angeordnet sein, so dass sich eine stufenartige Anordnung der Ergänzungsprofile im Überlappungsbereich ergibt. Dies ist, wie bereits zuvor dargestellt, von den jeweiligen Einsatz- und Anwendungsfällen bzw. von den jeweiligen Belastungsfällen abhängig. Die zuvor gemachten Ausführungen verdeutlichen nochmals, dass das erfindungsgemäße System einen Baukasten zur Ausgestaltung eines individuell auf den jeweiligen Einsatzfall optimierten Rahmenlängsträgeraufbaus zur Verfügung stellt, so dass sich Fertigungs- und Produktionskosten durch diese optimierte Ausgestaltung der jeweiligen Rahmenlängsträgeraufbauten auf einfache Weise senken lassen.

In Verbindung mit dem eben beschriebenen Rahmenlängsträgeraufbau im Überlappungsbereich ist es weiter besonders vorteilhaft, dass wenigstens eines der Ergänzungsprofile im Übergangsbereich zum den Mittelsteg überragenden Profilschenkelbereich mit einer solchen Abwinklung und/oder Umbiegung versehen ist, dass der den Mittelsteg überragende Profilschenkelbereich um eine definierte Versatzstrecke, insbesondere um wenigstens einen Teil der Wandstärke des Mittelsteges, gegenüber dem am Mittelsteg angebundenen Profilschenkelbereich in Richtung auf den Profilschenkelbereich des zugeordneten, anderen Ergänzungsprofiles zu versetzt ist. Damit lässt sich auf einfache Weise die flächige Anlageverbindung der beiden Ergänzungsprofile im Überlappungsbereich sowie im den Mittelsteg in Hochachsenrichtung überragenden Bereich sicherstellen.

Die Ergänzungsprofile können mit dem Basisprofil grundsätzlich auf herkömmliche Weise form- und kraftschlüssig, zum Beispiel mittels wenigstens einer Schraub- und/oder Nietverbindung, verbunden werden. Gemäß einem besonders vorteilhaften Aspekt der vorliegenden Erfindungsidee sollen die Ergänzungsprofile jedoch mit dem Basisprofil stoffschlüssig, und zwar insbesondere mittels einer Klebeverbindung verbunden werden. Besonders vorteilhaft wäre es in diesem Zusammenhang, die miteinander zu verbindenden Bauteile mittels einer flächigen Klebeverbindung zu verbinden, vorzugsweise mittels einer den gesamten Anlage- und Verbindungsbereich der miteinander zu verbindenden Bauteile mit einer definierten Kleberschichtstärke überdeckenden und einen definierten Spaltabstand zwischen den miteinander zu verbindenden Bauteilen ausfüllenden Klebeverbindung verbunden sind. Der Spaltabstand kann zum Beispiel durch Distanzelemente, wie zum Beispiel in den Kleber eingebrachte Kugeln oder in den Verbindungsbereich eingepresste Noppen etc., sichergestellt werden. Hierdurch ergeben sich eine Reihe von Vorteilen:
So kann die Klebeverbindung ebenso wie eine kraftschlüssige Verbindung, zum Beispiel eine Schraubverbindung oder eine Nietverbindung, eine hochfeste und den jeweiligen Erfordernissen genügende Bauteilfixierung sicherstellen, wobei über die Klebstoffschichtdicke zudem auch Einfluss auf die Eigenfrequenz und Rahmenelastizität genommen werden kann. Des Weiteren kann durch den Einsatz der Klebstofftechnik eine erhebliche Gewichtseinsparung erzielt werden, da eine Vielzahl von Schraub- und/oder Nietverbindungen, die regelmäßig erheblich zum hohen Gewicht der Rahmenaufbauten beitragen, eingespart werden können. Insbesondere ergibt sich hier der Vorteil, dass auch bei einer kombinierten form- und/oder kraftschlüssigen Verbindung mit einer Klebeverbindung nach wie vor eine Reihe von Schraub- bzw. Nietverbindungen auf jeden Fall eingespart werden kann. Der Einsatz der Klebeverbindung ermöglicht des Weiteren auf einfache Weise einen Materialmix, da die Kleberschicht die ansonsten unterschiedlich korrosionsanfälligen Bauteile auf Abstand hält, so dass zum Beispiel herkömmliche Stahlmaterialien, zum Beispiel im Bereich des Basisprofils, mit Leichtmetall-Werkstoffen der Ergänzungsprofile auf einfache Weise kombiniert werden können, ohne dass es zu einer Kontaktkorrosion kommen kann.

Ein weiterer besonderer Vorteil der Verklebung kann darin gesehen werden, dass mittels der Verklebung die Verbindungsstellen sehr gut hermetisch abgedichtet werden können, was ebenfalls im Hinblick auf den Korrosionsschutz von wesentlicher Bedeutung ist.

Ein weiterer wesentlicher Vorteil der erfindungsgemäßen Lösung kann darin gesehen werden, dass beim Einsatz der Klebetechnik zudem die Aushärtung der Klebeverbindung im Rahmen der ohnehin vorzusehenden Beschichtung des Rahmenlängsträgers, insbesondere einer KTL-Beschichtung (KTL = Kataphoresische-Tauch-Lackierung) erfolgen kann.

Der Kleber wird bevorzugt als flüssiger Klebstoff aufgebracht, könnte grundsätzlich aber auch durch ein Klebeband gebildet sein.

Gemäß einem hierzu besonders vorteilhaften Erfindungsaspekt wird vorgeschlagen, dass die miteinander zu verbindenden Bauteile im Klebeverbindungsbereich zudem mittels wenigstens einer eine Bauteilfixierung vor dem Aushärten der Klebeverbindung bewirkenden form- und/oder kraftschlüssigen Verbindung, insbesondere wenigstens einer Schraubverbindung, verbunden werden. Grundsätzlich könnte diese Verbindung nach dem Aushärten auch wieder entfernt werden. Besonders vorteilhaft ist es jedoch, wenn mittels der die Bauteilvorfixierung bis zur Aushärtung der Klebeverbindung ermöglichenden wenigstens einen kraftschlüssigen Verbindung gleichzeitig wenigstens ein Anbauteil und/oder Aggregat am Rahmenlängsträger oder am Rahmenlängsträgeraufbau festgelegt wird. Dadurch lässt sich eine besonders vorteilhafte Funktionsintegration erzielen, da die ohnehin vorzusehenden Verbindungselemente für die Anbauteile gleichzeitig als Fixier- bzw. Referenzpunkte zur exakten Relativpositionierung der miteinander durch die Klebeverbindung zu verbindenden Bauteile erfolgen kann. Diese zusätzlichen kraftschlüssigen Verbindungen bewirken dabei zudem eine Unterstützung der Klebeverbindung, so dass sich besonders hochfeste und sichere Verbindungen zwischen den einzelnen Bauteilen ergeben.

Grundsätzlich gesehen ermöglicht somit die erfindungsgemäße Lösung, ganz allgemein gesehen, den Einsatz von Leichtbau und Klebetechnik in Verbindung mit Rahmenlängsträgeraufbauten von Nutzfahrzeugen, was die zuvor bereits beschriebenen zahlreichen Vorteile im Hinblick auf Gewicht, Kosten, Kraftfluss etc. bringt und ein individuelles, einfaches Anpassen der jeweiligen Rahmenlängsträgergeometrien an die jeweiligen Anwendungs- und Einsatzfälle, ausgehend von einem gleichen Basisprofil, mit sich bringt.

Durch die erfindungsgemäße Lösung können somit sowohl am Basisprofil als auch am Ergänzungsprofil bzw. an den Ergänzungsprofilen sehr geringe Materialstärken von unter 12mm, insbesondere unter 10mm, realisiert werden, zum Beispiel Wandstärken von 3 bis 5mm. Insbesondere sind 8mm üblich, bei Schwerfahrzeugen 10mm bzw. 12mm und bei leichteren Fahrzeugen 7mm.

Die erfindungsgemäße Lösung ermöglicht des Weiteren, falls dies die jeweiligen Einsatzfälle bzw. Belastungsfälle erfordern, dass das Basisprofil und/oder die Ergänzungsprofile an definierten Bereichen, insbesondere an definierten Bereichen der vom Mittelstegbereich wegragenden Profilschenkel, mit wenigstens einem Verstärkungselement, insbesondere im Sinne einer Materialdopplung, verstärkt ist. Dies kann beispielsweise durch wenigstens ein separates Bauteil als Verstärkungselement erfolgen, zum Beispiel ein streifen- und/oder plattenförmiges oder aber auch ein profiliertes, zum Beispiel L-förmiges Bauteil, das mit dem Basisprofil und/oder dem jeweils zugeordneten Ergänzungsprofil kraftschlüssig mittels einer Schraub- und/oder Nietverbindung und/oder mittels einer Klebeverbindung verbunden ist. Alternativ dazu kann das Verstärkungselement aber auch durch eine Umbiegung und/oder Umbördelung eines freien Profilschenkelendbereiches eines Profilschenkels des Basisprofils und/oder wenigstens eines Ergänzungsprofils ausgebildet sein. Ebenso kann die Verstärkung aber auch integral am jeweiligen Profilbauteil ausgebildet sein, zum Beispiel durch eine entsprechende Walzung des jeweiligen Profilbauteils mit unterschiedlichen Wandstärken, zum Beispiel im Sinne eines Tailored-Blank-Bauteils.

Die Aufgabe wird bezüglich des Verfahrens zudem gelöst durch die Merkmale des Anspruchs 23.

Gemäß Anspruch 23 wird ein Verfahren zur Herstellung eines Rahmenlängsträgeraufbaus vorgeschlagen, mit wenigstens einem sich im montierten Zustand in Fahrzeuglängsrichtung erstreckenden modular aufgebauten Rahmenlängsträger, wobei der Rahmenlängsträger ein Basisprofil aufweist, bevorzugt ein sich über die gesamte Länge des Rahmenlängsträgers erstreckendes Basisprofil aufweist, an dem wenigstens ein durch ein separates Bauteil gebildetes Ergänzungsprofil in einer flächigen Anlageverbindung angebunden wird. Erfindungsgemäß wird das wenigstens eine Ergänzungsprofil mit dem Basisprofil mittels einer Klebeverbindung und zusätzlich mittels wenigstens einer kraft- und/oder formschlüssigen Verbindung, insbesondere mittels wenigstens einer Niet- und/oder Schraubverbindung, verbunden, wobei die miteinander zu verbindenden Bauteile mittels der wenigstens einen kraft- und/oder formschlüssigen Verbindung bis zur Aushärtung der Klebeverbindung positionsgenau ausgerichtet und/oder vorfixiert werden.

Die sich mit der erfindungsgemäßen Verfahrensführung ergebenden Vorteile wurden bereits zuvor in Verbindung mit dem Rahmenlängsträgeraufbau ausführlich erläutert, so dass diesbezüglich auf die zuvor gemachten Ausführungen verwiesen wird.

Die Aushärtung der Klebeverbindung wird, wie bereits zuvor geschildert, auch hier bevorzugt im Rahmen eines elektrochemischen Beschichtungsvorgangs, insbesondere einer KTL-Lackierung, des Rahmenlängsträgers vorgenommen.

Gemäß einer weiteren bevorzugten Ausgestaltung ist vorgesehen, dass mittels der die Bauteilvorfixierung und/oder -ausrichtung ermöglichenden wenigstens einen kraft- und/oder formschlüssigen Verbindung gleichzeitig wenigstens ein Anbauteil und/oder Aggregat am Rahmenlängsträger oder am Rahmenlängsträgeraufbau festgelegt wird. Auch die sich hiermit ergebenden Vorteile wurden bereits zuvor genannt.

Die miteinander zu verbindenden Bauteile werden mittels einer flächigen Klebeverbindung verbunden, vorzugsweise mittels einer im Wesentlichen den gesamten Anlage- und Verbindungsbereich der miteinander zu verbindenden Bauteile mit einer definierten Kleberschichtstärke überdeckenden und/oder einen definierten Spaltabstand zwischen den miteinander zu verbindenden Bauteilen ausfüllenden Klebeverbindung verbunden werden, was ebenfalls bereits zuvor näher erläutert worden ist.

Des Weiteren ist gemäß einer besonders bevorzugten Verfahrensführung vorgesehen, dass mehrere Ergänzungsprofile gemäß dem zuvor in Verbindung mit dem Rahmenlängsträgeraufbau bereits ausführlich gewürdigten Erfindungsaspekt so an einem sich zwischen gegenüberliegenden Rahmenlängsträgerbereichen, insbesondere zwischen einem Obergurtbereich und einem Untergurtbereich des Rahmenlängsträgers, erstreckenden Mittelsteg eines Basisprofils angebunden werden, dass in Längsträger-Erstreckungsrichtung wenigstens zwei Rahmenlängsträgerbereiche mit einem unterschiedlichen Rahmenlängsträger-Profilquerschnitt ausgebildet werden. Bezüglich der sich hierdurch ergebenden Vorteile wird wieder auf die zuvor gemachten Ausführungen verwiesen.

Ferner wird mit Anspruch 27 ein Rahmenlängsträger beansprucht, der mittels der erfindungsgemäßen Verfahrensführung hergestellt wird.

Die Erfindung wird anhand einer Zeichnung näher erläutert.

Es zeigen:
- Fig. 1: schematisch eine lediglich prinzipielle Darstellung und Draufsicht eines Rahmenlängsträgeraufbaus eines Fahrgestellrahmens eines Nutzfahrzeuges, zum Beispiel eines Lastkraftwagens oder eines Busses,
- Fig. 2a bis 2c: schematische Schnittansichten entlang der Linie A-A, B-B und C-C der Fig. 1,
- Fig. 2d: eine beispielhafte alternative Ausgestaltung des Rahmenlängsträgerbereichs der Fig. 2a,
- Fig. 3: schematisch eine perspektivische Übersichtsdarstellung eines Rahmenlängsträgers,
- Fig. 4a bis 4b: schematisch unterschiedliche Anordnungsmöglichkeiten eines L-förmigen Ergänzungsprofils an einem jeweils gleichen L-förmigen Basisprofil,
- Fig. 5a: schematisch ein C-förmiges Basisprofil mit einem L-förmigen Ergänzungsprofil an einem frontseitigen Rahmenlängsträgerbereich,
- Fig. 5b: den heckseitigen Rahmenlängsträgerbereich des Rahmenlängsträgeraufbaus der Fig. 5a,
- Fig. 6: schematisch eine erste Ausgestaltung eines durch Umbördeln verstärkten Profilschenkels eines hier L-förmigen Ergänzungsprofils,
- Fig. 7: eine weitere zur Fig. 6 alternative Ausgestaltung eines verstärkten Profilschenkels eines hier L-förmigen Ergänzungsprofils,
- Fig. 8: schematisch ein als Tailored- -Blank hergestelltes L-förmiges Ergänzungsprofil mit unterschiedlichen Wandstärken.

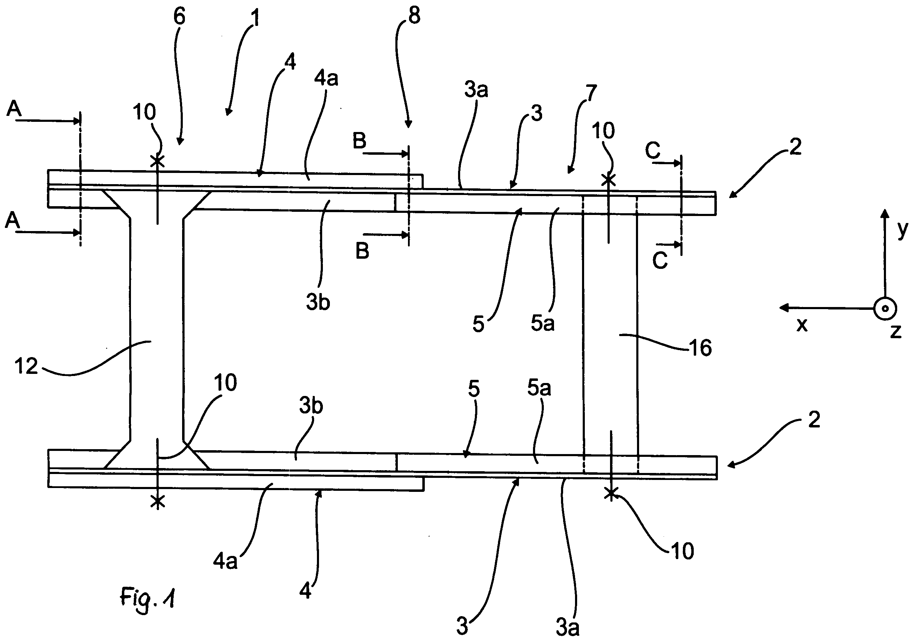

In der Fig. 1 ist schematisch und prinzipiell eine Draufsicht auf einen Rahmenlängsträgeraufbau 1 eines Fahrgestellrahmens eines Nutzfahrzeuges, zum Beispiel eines Lastkraftwagens oder eines Busses, gezeigt, der zwei voneinander beabstandete und im Wesentlichen parallel zueinander verlaufende, sich im hier gezeigten montierten Zustand in Fahrzeuglängsrichtung X verlaufende, modular aufgebaute Rahmenlängsträger 2 aufweist, die im hier gezeigten Beispielfall gleich bzw. identisch aufgebaut sind, was jedoch nicht zwingend der Fall sein müsste.

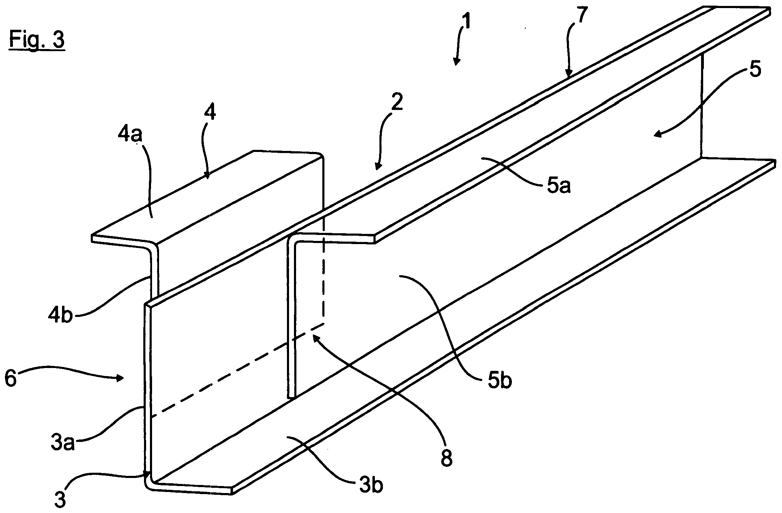

Wie dies insbesondere auch aus der Zusammenschau der Fig. 1 und 3 ersichtlich ist (die Fig. 3 zeigt schematisch einen der beiden Rahmenlängsträger 2 in einer prinzipiellen, perspektivischen Darstellung), weisen die Rahmenlängsträger 2 jeweils ein hier einen L-förmigen Profilquerschnitt aufweisendes Basisprofil 3 auf, das sich im Wesentlichen über die gesamte Länge des Rahmenlängsträgers 2 erstreckt und zudem geradlinig und ungekröpft ausgebildet ist, so dass das L-förmige Basisprofil einen durchgehend gleichen bzw. konstanten Profilquerschnitt aufweist.

Konkret weist das Basisprofil 3 hier einen sich stegartig und im Wesentlichen in Fahrzeughochachsenrichtung bzw. in Vertikalrichtung Z (siehe Fig. 1) nach oben erstreckenden Mittelsteg 3a auf, an dem als Untergurtprofil ein L-Schenkel 3b ausgebildet ist und im hier gewählten Beispielfall im Wesentlichen in Fahrzeugquerrichtung Y wegragt. Dieser L-Schenkel 3b weist in Fahrzeugquerrichtung nach innen, und zwar hier beispielhaft bei beiden Rahmenlängsträgern 2.

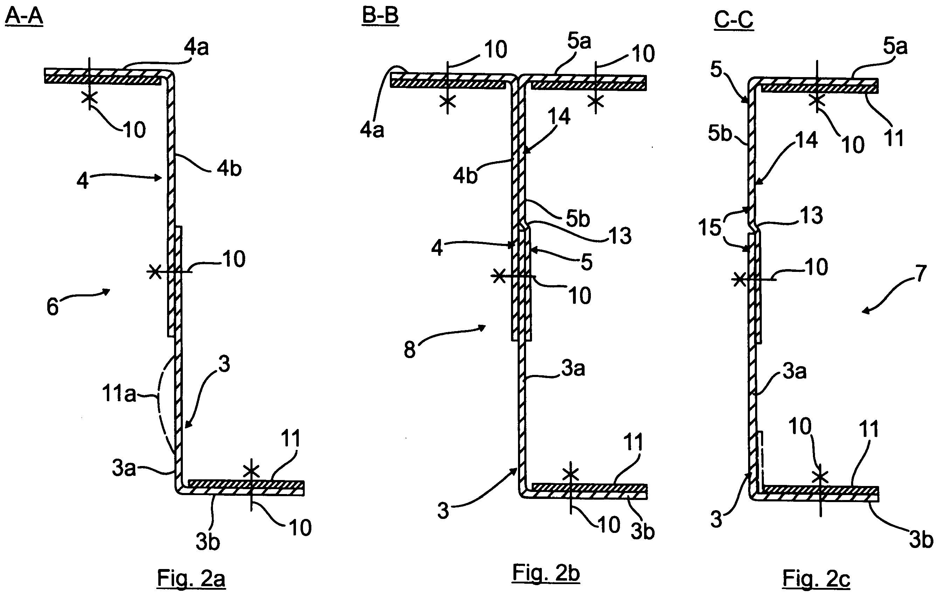

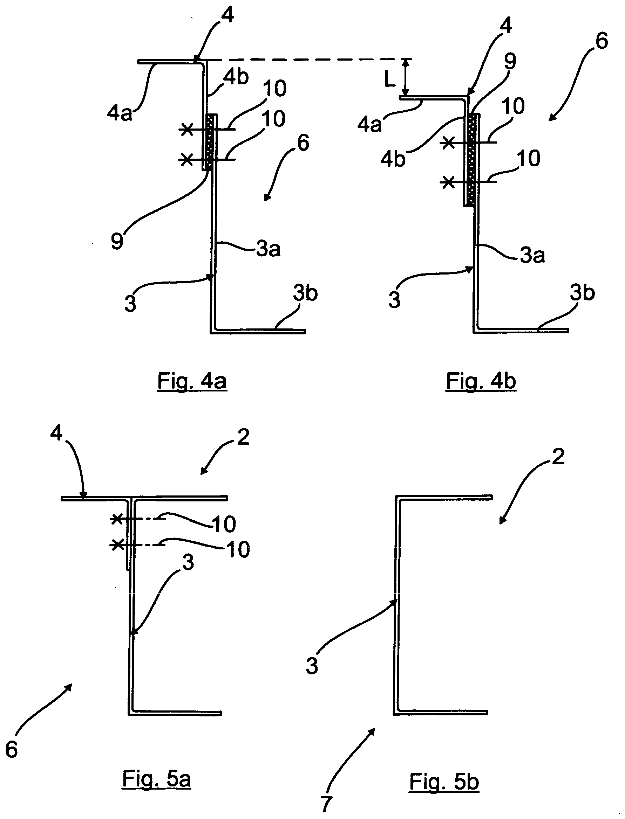

Wie dies insbesondere aus der den Schnitt entlang der Linie A-A zeigenden Fig. 2a in Verbindung mit den Fig. 1 und 3 ersichtlich ist, ist am Mittelsteg 3a des Basisprofils 3, und zwar an der, bezogen auf die Fahrzeugquerrichtung Y, Außenseite des Mittelsteges 3a ein vorderes Ergänzungsprofil 4 mit einem L-förmigen Profilquerschnitt angebunden. Konkret ist hier ein Vertikalschenkel 4b des vorderen L-Ergänzungsprofils 4 in einer flächigen Anlageverbindung an der Außenseite des Mittelsteges 3a angebunden, und zwar bevorzugt, wie dies insbesondere aus der Fig. 4a ersichtlich ist, mittels einer vollflächigen Klebeschicht 9 als Klebeverbindung und einer oder mehrerer kraftschlüssiger Schraubverbindungen 10. Die Klebeschicht 9 ist in der Darstellung der Fig. 2a aus Übersichtlichkeitsgründen nicht eingezeichnet. Ebenso ist die Anzahl der hier in sämtlichen Figuren dargestellten Schraubverbindungen 10 ebenfalls nur beispielhaft zu verstehen, um die Erfindungsidee anhand eines konkreten Ausführungsbeispiels näher zu beschreiben.

Das vordere L-Ergänzungsprofil 4 weist zudem einen L-Schenkel 4a auf, der in Fahrzeugquerrichtung Y gesehen nach außen vom Mittelsteg 3a weg weist und hier ein Obergurtprofil ausbildet. Damit ergibt sich in diesem frontseitigen Rahmenlängsträgerbereich 6 ein insgesamt Z-förmiger Profilquerschnitt des Rahmenlängsträgers 2, wie dies insbesondere aus der Fig. 2a gut ersichtlich ist.

Sofern dies für den jeweiligen Belastungsfall bzw. Einsatzfall als erforderlich angesehen wird, können am Rahmenlängsträger 2 zusätzliche Verstärkungselemente 11 vorgesehen werden, die im Falle der Ausgestaltung nach Fig. 2a hier jeweils als plattenförmige Streifen mittels einer zum Beispiel Klebeverbindung mit dem L-Schenkel 3b des Basisprofils 3 und mit dem L-Schenkel 4a des vorderen L-Ergänzungsprofils 4 verbunden sind. Alternativ oder zusätzlich dazu können die Verstärkungselemente 11 aber auch mittels einer Schraubverbindung 10 am jeweils zugeordneten Bauteil angebunden sein, was in der Fig. 2a ebenfalls lediglich äußerst schematisch eingezeichnet ist. Das Verstärkungselement 11 kann, wie in der Fig. 2c strichliert dargestellt, auch durch ein Profilbauteil, hier ein L-Profilbauteil, gebildet sein.

Zur Verstärkung einzelner Rahmenlängsträgerbereiche, insbesondere bei dünner Wandstärke des zum Beispiel Basisprofils 3, kann vorgesehen sein, dass definierte Bereiche mit einer sickenartigen Versteifung 11a versehen sind, was in der Fig. 2a lediglich äußerst schematisch eingezeichnet ist.

Wie dies weiter insbesondere dem Vergleich der Fig. 4a und 4b entnommen werden kann, besteht des Weiteren die Möglichkeit, je nach Einsatzfall und je nach Belastungsfall bzw. je nach Fahrzeugtyp, auf der Basis eines grundsätzlich gleichen bzw. identischen Basisprofils 3 einen Z-förmigen Profilquerschnitt des Rahmenlängsträgers 2 zur Verfügung zu stellen, der sich hinsichtlich seiner Höhenerstreckung unterscheidet. Dies kann einfach dadurch erfolgen, dass das L-förmige Ergänzungsprofil 4, wie der Vergleich der Fig. 4a und 4b zeigt, zum Beispiel für diejenigen Einsatzfälle, bei denen ein in Vertikal- bzw. Hochachsenrichtung Z niedrigerer Profilaufbau erforderlich ist, das L-Ergänzungsprofil 4 entsprechend tiefer am Mittelsteg 3a angebunden wird. Der Höhenversatz ist hier mit L eingezeichnet. Dieses Beispiel, das hier nur beispielhaft in Verbindung mit dem frontseitigen Rahmenlängsträgerbereich 6 näher erläutert worden ist, gilt selbstverständlich für jedweden Bereich des Rahmenlängsträgers 2, insbesondere auch für den hinteren, heckseitigen Rahmenlängsträgerbereich 7, der nachfolgend noch in Verbindung mit zum Beispiel der Fig. 2c näher beschrieben wird. In Verbindung mit den Ausgestaltungen der Fig. 4a und 4b soll lediglich beispielhaft und schematisch verdeutlicht werden, welche flexiblen Gestaltungsmöglichkeiten mit dem erfindungsgemäßen modularen Rahmenlängsträgeraufbau zur Verfügung gestellt werden. Insbesondere ist es dabei auch möglich, zum Beispiel das Basisprofil 3 aus einem anderen Werkstoff zu gestalten als das oder die Ergänzungsprofile. Ebenso können Basisprofil und Ergänzungsprofile unterschiedliche Wandstärken bzw. Materialstärken aufweisen.

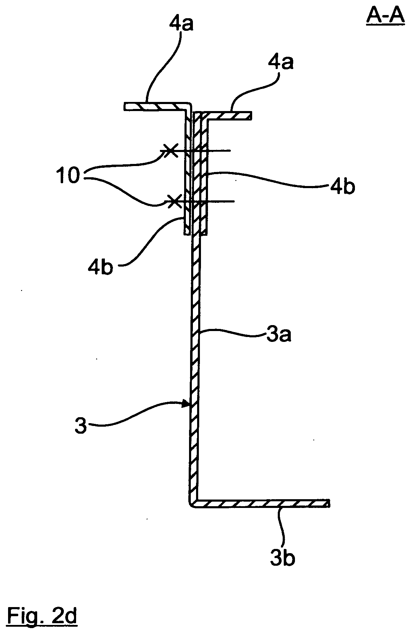

Ebenso ist es als Alternative zur Ausgestaltung gemäß Fig. 2a weiter möglich (siehe Fig. 2d), zum Beispiel bei einem gewünschten größeren Radeinschlag, den in der Fig. 2a gezeigten Profilschenkel 4a zu verkürzen und stattdessen auf der gegenüberliegenden Seite des Mittelstegs 3a ein weiteres L-Ergänzungsprofil 4 anzusetzen, das einen ebenfalls kurzen Profilschenkel 4a aufweist und dementsprechend den Bauraum in Querrichtung nicht sonderlich beeinträchtigt. Damit wird ein gleich steifer Proflquerschnitt zur Verfügung gestellt, der einfachst aus mehreren Profilbauteilen aufgebaut werden kann, und zwar ohne dass aufwendige fertigungstechnische Bearbeitungen erforderlich sind. Der erfindungsgemäße Baukasten ermöglicht somit, wie dieses auch auf jeden anderen Bereich des Rahmenlängsträgers analog anwendbare Beispiel zeigt, eine einfache und flexibel einsetzbare, bedarfsgerechte Konstruktion eines Rahmenlängsträgers.

Des Weiteren ist aus den Fig. 4a und 4b gut ersichtlich, dass die Klebeschicht 9 die beiden Bauteile Basisprofil 3 einerseits und vorderes L-Ergänzungsprofil 4 andererseits in einem solchen definierten Abstand hält, dass hierdurch auch bei unterschiedlichen Werkstoffen eine Kontaktkorrosion vermieden wird. Je nach der Dicke der verwendeten Klebeschicht 9 kann zudem ein bestimmtes Dämpfungs- und Schwingungsverhalten des Rahmenlängsträgers und damit des Rahmenlängsträgeraufbaus 1 insgesamt eingestellt bzw. vorgegeben werden.

Anhand der lediglich schematischen und beispielhaften Anbindung des vorderen L-Ergänzungsprofils 4 am Basisprofil 3 kann in Zusammenschau mit der schematischen Darstellung der Fig. 1 eine weitere besonders bevorzugte erfindungsgemäße Ausführungsform dargestellt werden. So ist, wie dies insbesondere aus der Fig. 2a und auch aus den Fig. 4a und 4b gut ersichtlich ist, das L-Ergänzungsprofil 4 zusätzlich zur Klebeschicht 9 mittels einer oder mehrerer kraftschlüssiger Verbindungen, insbesondere mittels Schraubverbindungen 10 an den Mittelsteg 3a des Basisprofils 3 festgelegt, um die miteinander zu verbindenden Bauteile (Basisprofil 3 und Ergänzungsprofil 4) vor dem Aushärten der Klebeschicht 9 exakt zueinander auszurichten und zu positionieren, das heißt vorzufixieren. Das so mit der Klebeschicht 9 versehene und die Schraubverbindungen 10 aufweisende Bauteil wird dann im Rahmen einer KTL-Lackierung in üblicher Weise beschichtet, wobei aufgrund der hohen Temperaturen der KTL-Beschichtung ein Aushärten der Klebeschicht 9 erfolgt, so dass das L-Ergänzungsprofil 4 dann sowohl durch die Klebeverbindung mittels der Klebeschicht 9 als auch durch die Schraubverbindungen 10, quasi doppelt gesichert, am Basisprofil 3 angebunden ist. In diesem Fall kann dann, wenn zum Beispiel eine der Anbindungen versagen sollte, die jeweils andere Verbindungstechnik die Trag- und Verbindungsfunktion weiter wahrnehmen bzw. übernehmen.

Die Schraubverbindungen 10 stellen dabei besonders bevorzugt auch die Schraubverbindungen dar, mittels denen ein weiteres Anbauteil des Rahmenlängsträgeraufbaus 1, hier beispielhaft ein vorderer Querträger 12 an den gegenüberliegenden Rahmenlängsträgern 2 ohnehin angebunden ist. Die Schraubverbindungen 10 übernehmen hier somit in einer Doppelfunktion neben der Festlegung zusätzlicher Anbauteile, wie hier beispielhaft des vorderen Querträgers 12, gleichzeitig auch die Vorfixierung des oder der Ergänzungsprofile am Basisprofil 3, bevor die jeweilige Klebeverbindung ausgehärtet ist.

Selbstverständlich ist es auch möglich, die Klebeverbindung auch außerhalb eines Beschichtungsvorgangs aushärten zu lassen, was unter Umständen jedoch einen erhöhten Zeitaufwand bedeutet.

An dieser Stelle sei ausdrücklich nochmals erwähnt, dass der vordere Querträger 12 hier lediglich schematisch und beispielhaft gewählt worden ist, dass selbstverständlich jedoch auch andere Bauteilanbindungs- bzw. Verbindungselemente am Rahmenlängsträgeraufbau analog verwendet werden können, beispielsweise ein Motorhalter, ein Getriebebügel, ein Kotflügel, etc. um nur einige Beispiele zu nennen.

An dieser Stelle sei ausdrücklich erwähnt, dass anstelle der Schraubverbindungen 10 auch Nietverbindungen vorgesehen sein können. Ebenso wäre es grundsätzlich möglich, anstelle der kraftschlüssigen Verbindungselemente zur Vorpositionierung der Ergänzungsprofile am Basisprofil 3 rein formschlüssige Verbindungstechniken vorzusehen bzw. kombinierte formschlüssige und kraftschlüssige Verbindungstechniken vorzusehen.

Das zuvor Ausgeführte gilt analog und im übertragenen Sinne auch für den heckseitigen Rahmenlängsträgerbereich 7, bei dem, wie dies insbesondere der den Schnitt C-C der Fig. 1 zeigenden Fig. 2c entnommen werden kann, das Basisprofil 3 mittels eines hinteren L-förmigen Ergänzungsprofils 5 zu einem C-förmigen Profilquerschnitt ergänzt wird, dessen L-Schenkel 5a und 3b nach innen, zum jeweils anderen Rahmenlängsträger 2 hin weisen. Auch hier erfolgt die flächige Anbindung eines Vertikalschenkels 5b des L-Ergänzungsprofils 5 am Mittelsteg 3a vorteilhafter Weise mittels einer in der Fig. 2c nicht im Detail dargestellten flächigen Klebeverbindung und einer zum Beispiel Schraubverbindung 10, wobei selbstverständlich auch hier, lediglich eine Klebeverbindung oder eine Schraubverbindung (als Beispiel für eine kraftschlüssige Verbindung) vorgesehen sein kann.

Des Weiteren kann der Fig. 2c entnommen werden, dass auch hier, bei Bedarf, in der zuvor geschilderten Art und Weise wiederum versteifende Verstärkungselemente 11 angebracht bzw. vorgesehen sein können.

Die Anbindung des hinteren L-Ergänzungsprofils 5 kann grundsätzlich genau so erfolgen, wie in der Fig. 2a in Verbindung mit dem vorderen L-Ergänzungsprofil 4 dargestellt, das heißt mit in Rahmenlängsträger-Erstreckungsrichtung durchgehend geradem und ungekröpftem Vertikalschenkel 5b. Alternativ dazu kann dieser Vertikalschenkel 5b aber auch im Übergangsbereich zu dem Mittelsteg 3a überragenden Profilschenkelbereich des Vertikalschenkels 5b mit einer solchen Abwinklung bzw. Umbiegung 13 versehen sein, dass der den Mittelsteg 3a des Basisprofils überragende Profilschenkelbereich 14 um die Wandstärke des Mittelsteges 3a dergestalt versetzt ist, dass dieser überragende Profilschenkelbereich 14 zusammen mit dem Mittelsteg 3a eine im Wesentlichen durchgehende, ebene Außenfläche 15 ausbildet, was insbesondere dann von Vorteil ist, wenn, wie in der den schnitt entlang der Linie B-B der Fig. 1 zeigenden Fig. 2b ersichtlich ist, die beiden L-Ergänzungsprofile 4, 5, die auf gegenüberliegenden Seiten des Mittelsteges 3a des Basisprofils angebunden sind, einander in einem mittleren Rahmenlängsträgerbereich bzw. Überlappungsbereich 8 in Rahmenlängsträger-Erstreckungsrichtung einander überlappen, weil dadurch sichergestellt ist, dass auch der überragende Profilschenkelbereich 14 des hinteren L-Ergänzungsprofils 5 in einer flächigen Anlageverbindung am entsprechend zugeordneten Vertikalschenkel 4b anliegt, so dass eine durchgehend flächige Anlageverbindung des Vertikalschenkels 4b des vorderen L-Ergänzungsprofils 4 im Überlappungsbereich 8 sowohl am Mittelsteg 3a des Basisprofils 3 als auch am Vertikalschenkel 5b des hinteren L-Ergänzungsprofils 5 sichergestellt ist. Auch zwischen den beiden Vertikalschenkeln 4b, 5b kann die Verbindung grundsätzlich als Klebeverbindung und/oder Kraftschluss- und/oder Formschlussverbindung ausgelegt sein. Ebenso wäre es auch möglich, im Anlagebereich des überragenden Profilschenkelbereichs 14 am Vertikalschenkel 4b des vorderen L-Ergänzungsprofils 4 keine zusätzliche Verbindungsmaßnahme vorzusehen, sondern eine bloße Anlageverbindung dieser beiden Schenkelbereiche in den Mittelsteg 3a des Basisprofils 3 überragenden Teil sicherzustellen.

Auch wenn in Verbindung mit der Fig. 2b die beiden den Obergurt ausbildenden L-Schenkel 4a und 5a auf einer gleichen Höhe liegen, was in Verbindung mit der Ausgestaltung der Fig. 2b der Ausbildung eines T-Profils entspricht, können diese beiden L-Ergänzungsprofile 4, 5 selbstverständlich auch in der Höhe zueinander versetzt sein, was schematisch und beispielhaft in der Fig. 3 dargestellt ist.

Wie bereits zuvor des Öfteren erwähnt, können sowohl im mittleren Rahmenlängsträgerbereich 8 als auch im heckseitigen Rahmenlängsträgerbereich 7 die hier beispielhaft Schraubverbindungen als kraftschlüssige Verbindungen in einer Doppelfunktion sowohl der Vorfixierung des jeweiligen Ergänzungsprofils am Basisprofil 3 dienen, und zwar solange, bis die jeweils vorgesehene Klebeschicht ausgehärtet ist, und zusätzlich auch zur Anbindung weiterer Bauteile dienen, was in Verbindung mit dem heckseitigen Rahmenlängsträgerbereich 7 schematisch und beispielhaft mit dem hinteren Querträger 16 gezeigt ist.

Den eben gemachten Ausführungen ist ohne Weiteres zu entnehmen, dass das sich im Wesentlichen über die gesamte Länge des Rahmenlängsträgers 2 erstreckende, geradlinig und ungekröpft verlaufende Basisprofil 3 einteilig, das heißt insbesondere materialeinheitlich und/oder einstückig, ausgebildet ist, während sich die Ergänzungsprofile lediglich über einen Teilbereich der Längserstreckung des Rahmenlängsträgers 2 bzw. des Basisprofils 3 erstrecken.

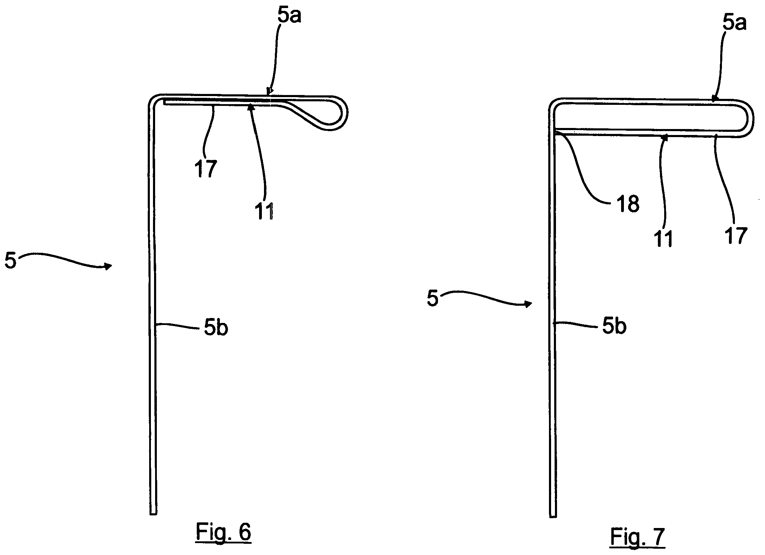

Wie dies in den Fig. 6 bis 8 lediglich anhand des hinteren L-Ergänzungsprofils 5 dargestellt ist, was aber ebenso für das vordere L-Ergänzungsprofil 4 bzw. für jedes Ergänzungsprofil bzw. für jedes Basisprofil gelten könnte, kann das Verstärkungselement 11 auch durch eine randseitige Umbiegung bzw. Umbördelung 17 des freien Endes des L-Schenkels 5a erfolgen. In der Ausgestaltung gemäß Fig. 6 ist die Umbördelung so vorgenommen, dass der umgebördelte bzw. umgebogene Bereich 17 wenigstens bereichsweise in einer flächigen Anlageverbindung am restlichen Bereich des L-Schenkels 5a anliegt. In der Fig. 7 ist die Ausführungsform dargestellt, bei der der umgebördelte bzw. umgebogene Bereich 17 einen definierten Spaltabstand vom restlichen Bereich des L-Schenkels 5a aufweist. Dafür stützt sich hier der umgebördelte Bereich 17 mit seiner freien Stirnkante 18 am Vertikalschenkel 5b des Ergänzungsprofils 5 ab.

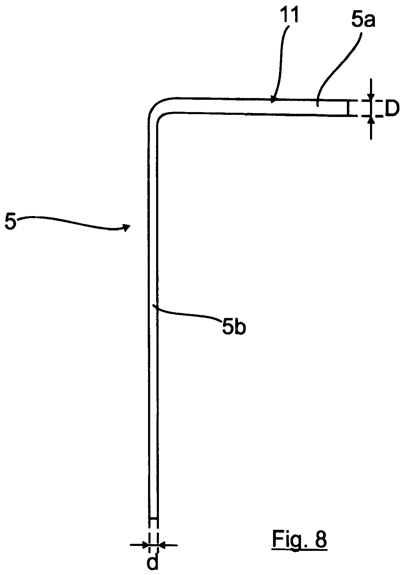

In der Fig. 8 ist schließlich eine Ausführungsvariante dargestellt, bei der das Ergänzungsprofil 5 im Bereich des Vertikalschenkels 5b eine wesentlich dünnere Materialstärke aufweist als der L-Schenkel 5a, beispielsweise die Materialstärke d des Vertikalschenkels 5b in etwa der Hälfte der Materialstärke D des L-Schenkels 5a entspricht. Beispielsweise kann die Materialstärke d des Vertikalschenkels 5b im Bereich zwischen 3 bis 5mm liegen, während die Materialstärke d des L-Schenkels 5a in etwa zwischen 6 bis 8mm betragen kann. Ein derartiges Profil mit unterschiedlichen Materialstärken kann zum Beispiel im Rahmen eines Tailored- Blank-Verfahrens hergestellt werden. Im Falle der Fig. 8 ist somit das Verstärkungselement 11, anders als in den Fig. 6 und 7, nicht durch einen umgebördelten Bereich 17 gebildet, sondern ist integraler Bestandteil des L-Schenkels 5a.

Wie zuvor ausgeführt, gilt das eben Gesagte grundsätzlich in Verbindung mit jedem anderen Ergänzungsprofil bzw. mit dem Basisprofil 3.

In der Fig. 5 ist schließlich noch eine alternative Ausgestaltung der vorliegenden Erfindungsidee gezeigt, bei der das Basisprofil 3 einen durchgehend C-förmigen Profilquerschnitt aufweist, so dass zur Ausbildung eines Z-förmigen Profilquerschnitts im in der Fig. 5a gezeigten frontseitigen Rahmenlängsträgerbereich 6 dort lediglich ein L-Ergänzungsprofil 4 vorzusehen ist, während im in der Fig. 5b dargestellten heckseitigen Rahmenlängsträgerbereich 7 aufgrund der ohnehin vorhandenen C-Form des Basisprofils 3 hier dann kein weiteres Ergänzungsprofil vorzusehen ist. Auch hier kann die Anbindung des L-förmigen Ergänzungsprofils 4 analog zu der vorher beschriebenen Art und Weise mittels einer oder mehrerer Schraubverbindungen 10 und/oder einer flächigen Klebeverbindung erfolgen.

## Patentansprüche

1. Rahmenlängsträgeraufbau für Fahrgestellrahmen von Nutzfahrzeugen, insbesondere von Lastkraftwagen und/oder Bussen, mit wenigstens einem sich im montierten Zustand in Fahrzeuglängsrichtung erstreckenden modular aufgebauten Rahmenlängsträger (2), **dadurch gekennzeichnet,**
**dass** der Rahmenlängsträger (2) ein sich über die gesamte Länge des Rahmenlängsträgers (2) erstreckendes Basisprofil (3) mit einem plattenförmigen und im Querschnitt betrachtet zwischen gegenüberliegenden Rahmenlängsträgerbereichen erstreckenden Mittelsteg (3a) aufweist, welcher Mittelsteg (3a) in Basisprofil-Längserstreckungsrichtung gesehen geradlinig verläuft und an welchem Mittelsteg (3a) durch separate Bauteile gebildete Ergänzungsprofile (4, 5) in einer flächigen Anlageverbindung angebunden sind,
**dass** mehrere Ergänzungsprofile (4, 5) so am geradlinig und über die gesamte Länge des Rahmenlängsträgers (2) verlaufenden Mittelsteg (3a) des Basisprofils (3) angebunden sind, dass in Längsträger-Erstreckungsrichtung wenigstens zwei Rahmenlängsträgerbereiche (6, 7, 8) mit einem unterschiedlichen Rahmenlängsträger-Profilquerschnitt ausgebildet sind, und
**dass** wenigstens der Mittelsteg (3a) des sich in Rahmenlängsträgerrichtung erstreckenden Basisprofils (3) ohne eine Kröpfung in Hochachsenrichtung und ohne Knick quer zur Rahmenlängsträgerrichtung ausgebildet ist.

2. Rahmenlängsträgeraufbau nach Anspruch 1, **dadurch gekennzeichnet, dass** bevorzugt das gesamte Basisprofil (3) als ungekröpftes und ungeknicktes und damit in Rahmenlängsträgerrichtung geradlinig verlaufendes Profilbauteil ausgebildet ist.

3. Rahmenlängsträgeraufbau nach einem der vorhergehenden Ansprüche, **dadurch gekennzeichnet, dass** wenigstens der Mittelsteg (3a) des Basisprofils (3), bevorzugt das gesamte Basisprofil (3), einen in Längserstreckungsrichtung gesehen grundsätzlich durchgehend gleichen Profilquerschnitt aufweist und/oder dass der Mittelsteg (3), vorzugsweise außerhalb des Anbindungsbereiches der Ergänzungsprofile (4, 5), an definierten Stellen mit wenigstens einer sickenartigen Versteifung (11a) und/oder Ausbuchtung und/oder mit wenigstens einer Ausnehmung versehen ist.

4. Rahmenlängsträgeraufbau nach einem der vorhergehenden Ansprüche, **dadurch gekennzeichnet, dass** Ergänzungsprofile (4, 5) auf quer zur Rahmenlängsträgerrichtung gesehen derselben Seite oder auf unterschiedlichen Seiten des Mittelsteges (3a) des Basisprofils (3) in einer flächigen Anlageverbindung angebunden sind und/oder dass Ergänzungsprofile (4, 5) in unterschiedlichen Höhen an dem Mittelsteg (3a) des Basisprofils (3) in einer flächigen Anlageverbindung angebunden sind und/oder dass Ergänzungsprofile (4, 5) bezogen auf die Ergänzungsprofil-Längserstreckungsrichtung und die Basisprofil-Längserstreckungsrichtung um einen definierten Winkel versetzt zueinander in einer flächigen Anlageverbindung an dem Mittelsteg (3a) des Basisprofils (3) angebunden sind.

5. Rahmenlängsträgeraufbau nach einem der vorhergehenden Ansprüche, **dadurch gekennzeichnet, dass** wenigstens der an dem Mittelsteg (3a) des Basisprofils (3) angebundene Profilschenkel der Ergänzungsprofile (4, 5) ohne eine Kröpfung in Hochachsenrichtung und/oder ohne Knick quer zur Rahmenlängsträgerrichtung ausgebildet ist, bevorzugt das gesamte Ergänzungsprofil (4, 5) als ungekröpftes und/oder ungeknicktes und damit geradlinig verlaufendes Profilbauteil ausgebildet ist.

6. Rahmenlängsträgeraufbau nach einem der vorhergehenden Ansprüche, **dadurch gekennzeichnet, dass** wenigstens der an dem Mittelsteg (3a) des Basisprofils (3) angebundene Profilschenkel des jeweiligen Ergänzungsprofils (4, 5), bevorzugt das gesamte Ergänzungsprofil (4, 5), einen in Längserstreckungsrichtung gesehen grundsätzlich durchgehend gleichen Profilquerschnitt aufweist und/oder dass das Ergänzungsprofil (4, 5), vorzugsweise außerhalb des Anbindungsbereiches am Mittelsteg (3a) des Basisprofils (3), an definierten Stellen mit wenigstens einer sickenartigen Versteifung und/oder Ausbuchtung und/oder mit wenigstens einer Ausnehmung versehen ist.

7. Rahmenlängsträgeraufbau nach einem der vorhergehenden Ansprüche, **dadurch gekennzeichnet, dass** das Basisprofil (3) einen solchen Profilquerschnitt mit wenigstens einem, wenigstens abschnittsweise von dem Mittelsteg (3a) winklig abragenden Profilschenkel (3a) aufweist, der mittels der Ergänzungsprofile (4, 5) zu einem eine Z-Form und eine C-Form einschließenden oder aufweisenden Profilquerschnitt ergänzbar ist.

8. Rahmenlängsträgeraufbau nach einem der vorhergehenden Ansprüche, **dadurch gekennzeichnet, dass** das Basisprofil (3) wenigstens in einem bezogen auf die Fahrtrichtung, frontseitigen oder heckseitigen Längsträgerrahmenbereich (6) mit wenigstens einem Ergänzungsprofil (4) zu einem eine Z-Form einschließenden oder aufweisenden Profilquerschnitt ergänzt ist.

9. Rahmenlängsträgeraufbau nach einem der vorhergehenden Ansprüche, **dadurch gekennzeichnet, dass** das Basisprofil (3) wenigstens in einem, bezogen auf die Fahrtrichtung, frontseitigen oder heckseitigen Längsträgerrahmenbereich (7) mit wenigstens einem Ergänzungsprofil (5) zu einem eine C-Form einschließenden oder aufweisenden Profilquerschnitt, bevorzugt mit im montierten Zustand in Fahrzeugquerrichtung nach innen weisenden Profilschenkeln (3a, 5a), ergänzt ist.

10. Rahmenlängsträgeraufbau nach einem der vorhergehenden Ansprüche, **dadurch gekennzeichnet, dass** das Basisprofil (3) einen L-förmigen oder C-förmigen oder E-förmigen oder T-förmigen Profilquerschnitt aufweist und/oder dass die Ergänzungsprofile (4, 5) einen, bezogen auf die Ergänzungsprofile (4, 5) und/oder bezogen auf das Basisprofil (4, 5), gleichen oder unterschiedlichen Profilquerschnitt aufweisen und/oder dass die Ergänzungsprofile (4, 5) einen L- oder C- oder E-förmigen Profilquerschnitt aufweisen.

11. Rahmenlängsträgeraufbau nach einem der vorhergehenden Ansprüche, **dadurch gekennzeichnet, dass** Ergänzungsprofile (4, 5) einander in einem zwischen einem frontseitigen und einem heckseitigen Längsträgerrahmenbereich (5, 7) liegenden mittleren Längsträgerrahmenbereich (3), in Rahmenlängsträgerrichtung gesehen, wenigstens bereichsweise überlappen, vorzugsweise auf gegenüberliegenden Seiten des Mittelsteges (3a) wenigstens bereichsweise überlappen.

12. Rahmenlängsträgeraufbau nach Anspruch 11, **dadurch gekennzeichnet, dass** die auf gegenüberliegenden Seiten des Mittelsteges (3a) angebundenen Ergänzungsprofile (4, 5) den Mittelsteg (3a) in Hochachsenrichtung gesehen nach oben oder unten dergestalt überragen, dass die Ergänzungsprofile (4, 5) im Überlappungsbereich (8) der Ergänzungsprofile (4, 5) mit jeweils einem ihrer Profilschenkel (4b, 5b) in einer flächigen Anlageverbindung aneinander anliegen und/oder dass die weiteren Profilschenkel (4a, 5a) der Ergänzungsprofile (4, 5) in bezogen auf den Mittelsteg (3a) entgegengesetzte Richtung weisen.

13. Rahmenlängsträgeraufbau nach Anspruch 12, **dadurch gekennzeichnet, dass** wenigstens eines der Ergänzungsprofile (5) im Übergangsbereich zum den Mittelsteg (3a) überragenden Profilschenkelbereich (14) mit einer solchen Abwinklung und/oder Umbiegung (13) versehen ist, dass der den Mittelsteg (3a) überragende Profilschenkelbereich (14) um eine definierte Versatzstrecke, insbesondere um wenigstens einen Teil der Wandstärke des Mittelsteges (3a), gegenüber dem am Mittelsteg (3a) angebundenen Profilschenkelbereich in Richtung auf den Profilschenkelbereich des zugeordneten, anderen Ergänzungsprofils (4) zu versetzt ist.

14. Rahmenlängsträgeraufbau nach einem der vorhergehenden Ansprüche, **dadurch gekennzeichnet, dass** das Basisprofil (3) einteilig, insbesondere materialeinheitlich und/oder einstückig, ausgebildet ist.

15. Rahmenlängsträgeraufbau nach einem der vorhergehenden Ansprüche, **dadurch gekennzeichnet, dass** die Ergänzungsprofile (4, 5) mit dem Basisprofil (3) stoffschlüssig, insbesondere mittels einer Klebeverbindung (9), und/oder form- und/oder kraftschlüssig, insbesondere mittels wenigstens einer Schraubverbindung (10) verbunden sind.

16. Rahmenlängsträgeraufbau nach Anspruch 15, **dadurch gekennzeichnet, dass** die miteinander zu verbindenden Bauteile (3, 4, 5) mittels einer flächigen Klebeverbindung (9) verbunden sind, vorzugsweise mittels einer im Wesentlichen den gesamten Anlage- und Verbindungsbereich der miteinander zu verbindenden Bauteile mit einer definierten Kleberschichtstärke überdeckenden und/oder einen definierten Spaltabstand zwischen den miteinander zu verbindenden Bauteilen (3, 4, 5) ausfüllenden Klebeverbindung (9) verbunden sind.

17. Rahmenlängsträgeraufbau nach Anspruch 16, **dadurch gekennzeichnet, dass** die miteinander zu verbindenden Bauteile (3, 4, 5) im Klebeverbindungsbereich zudem mittels wenigstens einer eine Bauteilvorfixierung vor dem Aushärten der Klebeverbindung bewirkenden form- und/oder kraftschlüssigen Verbindung (10) insbesondere wenigstens einer Niet- und/oder Schraubverbindung, verbunden sind.

18. Rahmenlängsträgeraufbau nach Anspruch 17, **dadurch gekennzeichnet, dass** mittels der die Bauteilvorfixierung bis zur Aushärtung der Klebeverbindung (9) ermöglichenden wenigstens einen form- und/oder kraftschlüssigen Verbindung (10) gleichzeitig wenigstens ein Anbauteil (12, 16) und/oder Aggregat am Rahmenlängsträger (2) oder am Rahmenlängsträgeraufbau (1) festgelegt ist.

19. Rahmenlängsträgeraufbau nach einem der vorhergehenden Ansprüche, **dadurch gekennzeichnet, dass** das Basisprofil (3) und/oder die Ergänzungsprofile (4, 5) an definierten Bereichen, insbesondere an definierten Bereichen der vom Mittelstegbereich wegragenden Profilschenkel, verstärkt sind und/oder mit wenigstens einem Verstärkungselement (11), insbesondere im Sinne einer Materialdopplung, verstärkt ist.

20. Rahmenlängsträgeraufbau nach Anspruch 19, **dadurch gekennzeichnet, dass** das Verstärkungselement (11) durch wenigstens ein separates Bauteil, insbesondere ein streifen- und/oder plattenförmiges Bauteil, gebildet ist und/oder dass das Verstärkungselement (11) durch eine Umbiegung und/oder Umbördelung (17) eines freien Profilschenkelendbereiches eines Profilschenkels des Basisprofils (3) und/oder wenigstens eines Ergänzungsprofils (4, 5) ausgebildet ist, und/oder dass das Verstärkungselement (11) integral durch unterschiedlich dick ausgebildete, insbesondere gewalzte Bereiche des jeweiligen Profilbauteils ausgebildet ist.

21. Rahmenlängsträgeraufbau nach einem der vorhergehenden Ansprüche, **dadurch gekennzeichnet, dass** das Basisprofil (3) und wenigstens eines der Ergänzungsprofile (4, 5) und/oder wenigstens ein Teil der Ergänzungsprofile (4, 5) untereinander eine unterschiedliche Materialstärke aufweisen, insbesondere eine Materialstärke von unter 12mm aufweisen, und/oder aus einem unterschiedlichen Werkstoff und/oder mit unterschiedlicher Festigkeit hergestellt sind.

22. Nutzfahrzeug, insbesondere Lastkraftwagen oder Omnibus, mit einem Rahmenlängsträgeraufbau (1) nach einem der vorhergehenden Ansprüche.

23. Verfahren zur Herstellung eines Rahmenlängsträgers für einen Rahmenlängsträgeraufbau, insbesondere zur Herstellung eines Rahmenlängsträgeraufbaus nach einem der Ansprüche 1 bis 21, mit wenigstens einem sich im montierten Zustand in Fahrzeuglängsrichtung erstreckenden modular aufgebauten Rahmenlängsträger (2), **dadurch gekennzeichnet,**
**dass** der Rahmenlängsträger (2) ein sich über die gesamte Länge des Rahmenlängsträgers (2) erstreckendes Basisprofil (3) aufweist, an dem wenigstens ein durch ein separates Bauteil gebildetes Ergänzungsprofil (4, 5) in einer flächigen Anlageverbindung angebunden wird,
**dass** das Basisprofil (3) einen plattenförmigen und im Querschnitt betrachtet zwischen gegenüberliegenden Rahmenlängsträgerbereichen erstreckenden Mittelsteg (3a) aufweist, welcher Mittelsteg (3a) in Basisprofil-Längserstreckungsrichtung gesehen geradlinig verläuft und an welchem Mittelsteg (3a) durch separate Bauteile gebildete Ergänzungsprofile (4, 5) in einer flächigen Anlageverbindung angebunden werden,
**dass** mehrere Ergänzungsprofile (4, 5) so am geradlinig und über die gesamte Länge des Rahmenlängsträgers (2) verlaufenden Mittelsteg (3a) des Basisprofils (3) angebunden werden, dass in Längsträger-Erstreckungsrichtung wenigstens zwei Rahmenlängsträgerbereiche (6, 7, 8) mit einem unterschiedlichen Rahmenlängsträger-Profilquerschnitt ausgebildet werden,
**dass** wenigstens der Mittelsteg (3a) des sich in Rahmenlängsträgerrichtung erstreckenden Basisprofils (3) ohne eine Kröpfung in Hochachsenrichtung und/oder ohne Knick quer zur Rahmenlängsträgerrichtung ausgebildet ist, und
**dass** das wenigstens eine Ergänzungsprofil (4, 5) mit dem Basisprofil (3) mittels einer Klebeverbindung (9) und zusätzlich mittels wenigstens einer kraft- und/oder formschlüssigen Verbindung verbunden wird, wobei die miteinander zu verbindenden Bauteile mittels der wenigstens einen kraft- und/oder formschlüssigen Verbindung bis zur Aushärtung der Klebeverbindung (9) positionsgenau ausgerichtet und/oder vorfixiert werden.

24. Verfahren nach Anspruch 23, **dadurch gekennzeichnet, dass** die Aushärtung der Klebeverbindung (9) im Rahmen eines elektrochemischen Beschichtungsvorgangs, insbesondere einer KTL-Lackierung, des Rahmenlängsträgers (2) vorgenommen wird.

25. Verfahren nach Anspruch 23 oder 24, **dadurch gekennzeichnet, dass** mittels der die Bauteilvorfixierung und/oder -ausrichtung ermöglichenden wenigstens einen kraft- und/oder formschlüssigen Verbindung (10) gleichzeitig wenigstens ein Anbauteil (12, 16) und/oder Aggregat am Rahmenlängsträger (2) oder am Rahmenlängsträgeraufbau (1) festgelegt wird.

26. Verfahren nach einem der Ansprüche 23 bis 25, **dadurch gekennzeichnet, dass** die miteinander zu verbindenden Bauteile mittels einer flächigen Klebeverbindung (9) verbunden werden, vorzugsweise mittels einer im Wesentlichen den gesamten Anlage- und Verbindungsbereich der miteinander zu verbindenden Bauteile mit einer definierten Kleberschichtstärke überdeckenden und/oder einen definierten Spaltabstand zwischen den miteinander zu verbindenden Bauteilen ausfüllenden Klebeverbindung (9) verbunden werden.

## Claims

1. Frame longitudinal beam structure for chassis frames of utility vehicles, in particular of trucks and/or buses, having at least one frame longitudinal beam (2) of modular construction which extends in the vehicle longitudinal direction when in the mounted state,
**characterized**
**in that** the frame longitudinal beam (2) has a base profile (3) which extends over the entire length of the frame longitudinal beam (2) and which has a plate-shaped central web (3a) which, as viewed in cross section, extends between opposite frame longitudinal beam regions, which central web (3a) runs rectilinearly as viewed in the direction of the longitudinal extent of the base profile, and to which central web (3a) supplemental profiles (4, 5) formed by separate components are attached in areal abutting connection,
**in that** a plurality of supplemental profiles (4, 5) are attached to the central web (3a), which runs rectilinearly and over the entire length of the frame longitudinal beam (2), of the base profile (3) such that, in the direction of extent of the longitudinal beam, at least two frame longitudinal beam regions (6, 7, 8) of different frame longitudinal beam profile cross section are formed, and
**in that** at least the central web (3a) of the base profile (3) which extends in the direction of the frame longitudinal beam is formed without an offset in the vertical axis direction and without a kink transversely with respect to the direction of the frame longitudinal beam.

2. Frame longitudinal beam structure according to Claim 1, **characterized in that** preferably the entire base profile (3) is formed as a non-offset and non-kinked profile component which thus runs rectilinearly in the direction of the frame longitudinal beam.

3. Frame longitudinal beam structure according to either of the preceding claims,
**characterized in that** at least the central web (3a) of the base profile (3), preferably the entire base profile (3), has a profile cross section which is basically continuously constant as viewed in the direction of longitudinal extent, and/or **in that** the central web (3) is provided, preferably outside the attachment region of the supplemental profiles (4, 5) and at defined points, with at least one bead-like stiffening (11a) and/or protuberance and/or with at least one recess.

4. Frame longitudinal beam structure according to one of the preceding claims,
**characterized in that** supplemental profiles (4, 5) are attached in areal abutting connection to the central web (3a) of the base profile (3) on the same side or on different sides as viewed transversely with respect to the direction of the frame longitudinal beam, and/or **in that** supplemental profiles (4, 5) are attached in areal abutting connection to the central web (3a) of the base profile (3) at different heights, and/or **in that** supplemental profiles (4, 5) are attached in areal abutting connection to the central web (3a) of the base profile (3) so as to be offset by a defined angle with respect to one another in relation to the direction of longitudinal extent of the supplemental profile and the direction of longitudinal extent of the base profile.

5. Frame longitudinal beam structure according to one of the preceding claims,
**characterized in that** at least that profile leg of the supplemental profiles (4, 5) which is attached to the central web (3a) of the base profile (3) is formed without an offset in the vertical axis direction and/or without a kink transversely with respect to the direction of the frame longitudinal beam, preferably the entire supplemental profile (4, 5) is formed as a non-offset and/or non-kinked and therefore rectilinearly running profile component.

6. Frame longitudinal beam structure according to one of the preceding claims,
**characterized in that** at least that profile leg of the respective supplemental profile (4, 5) which is attached to the central web (3a) of the base profile (3), preferably the entire supplemental profile (4, 5), has a profile cross section which is basically continuously constant as viewed in the direction of longitudinal extent, and/or **in that** the supplemental profile (4, 5) is provided, preferably outside the attachment region to the central web (3a) of the base profile (3) and at defined points, with at least one bead-like stiffening and/or protuberance and/or with at least one recess.

7. Frame longitudinal beam structure according to one of the preceding claims,
**characterized in that** the base profile (3) has a profile cross section with at least one profile leg (3a) which projects at an angle from the central web (3a) at least in sections and which, by means of the supplemental profiles (4, 5), can be supplemented so as to form a profile cross section which encompasses or has a Z shape and a C shape.

8. Frame longitudinal beam structure according to one of the preceding claims,
**characterized in that** the base profile (3), at least in a front or rear longitudinal beam frame region (6) in relation to the direction of travel, is supplemented by means of at least one supplemental profile (4) so as to form a profile cross section which encompasses or has a Z shape.

9. Frame longitudinal beam structure according to one of the preceding claims,
**characterized in that** the base profile (3), at least in a front or rear longitudinal beam frame region (7) in relation to the direction of travel, is supplemented by means of at least one supplemental profile (5) so as to form a profile cross section which encompasses or has a C shape, preferably with profile legs (3a, 5a) which point inward in the vehicle transverse direction when in the mounted state.

10. Frame longitudinal beam structure according to one of the preceding claims,
**characterized in that** the base profile (3) has an L-shaped or C-shaped or E-shaped or T-shaped profile cross section and/or **in that** the supplemental profiles (4, 5) have a profile cross section which is identical or different in relation to the supplemental profiles (4, 5) and/or in relation to the base profile (4, 5), and/or **in that** the supplemental profiles (4, 5) have an L-shaped or C-shaped or E-shaped profile cross section.

11. Frame longitudinal beam structure according to one of the preceding claims,
**characterized in that** supplemental profiles (4, 5) overlap one another at least in regions in a central longitudinal beam frame region (3), which is situated between a front and a rear longitudinal beam frame region (5, 7), as viewed in the direction of the frame longitudinal beam, preferably overlap one another at least in regions on opposite sides of the central web (3a).

12. Frame longitudinal beam structure according to Claim 11, **characterized in that** the supplemental profiles (4, 5) which are attached to opposite sides of the central web (3a) project upward or downward beyond the central web (3a) as viewed in the vertical axis direction in such a way that the supplemental profiles (4, 5) bear against one another in areal abutting connection with in each case one of their profile legs (4b, 5b) in the region of overlap (8) of the supplemental profiles (4, 5), and/or **in that** the further profile legs (4a, 5a) of the supplemental profiles (4, 5) point in the opposite direction in relation to the central web (3a).

13. Frame longitudinal beam structure according to Claim 12, **characterized in that** at least one of the supplemental profiles (5) is provided, in the transition region to the profile leg region (14) which projects beyond the central web (3a), with such an angled portion and/or bent portion (13) that the profile leg region (14) which projects beyond the central web (3a) is offset by a defined offset distance, in particular by at least a part of the wall thickness of the central web (3a), in the direction of the profile leg region of the associated other supplemental profile (4) in relation to that profile leg region which is attached to the central web (3a).

14. Frame longitudinal beam structure according to one of the preceding claims,
**characterized in that** the base profile (3) is of integral form, in particular is formed from one material and/or in one piece.

15. Frame longitudinal beam structure according to one of the preceding claims,
**characterized in that** the supplemental profiles (4, 5) are connected to the base profile (3) cohesively, in particular by means of an adhesive connection (9), and/or in a positively locking and/or non-positively locking manner, in particular by means of at least one screw connection (10).

16. Frame longitudinal beam structure according to Claim 15, **characterized in that** the components (3, 4, 5) to be connected to one another are connected by means of an areal adhesive connection (9), preferably by means of an adhesive connection (9) which covers substantially the entire abutment and connecting region of the components to be connected to one another with a defined adhesive layer thickness, and/or which fills out a defined gap spacing between the components (3, 4, 5) to be connected to one another.

17. Frame longitudinal beam structure according to Claim 16, **characterized in that** the components (3, 4, 5) to be connected to one another are furthermore connected in the adhesive connection region by means of at least one positively locking and/or non-positively locking connection (10), in particular at least one rivet and/or screw connection, which provides component pre-fixing before the hardening of the adhesive connection.

18. Frame longitudinal beam structure according to Claim 17, **characterized in that** the at least one positively locking and/or non-positively locking connection (10) which permits the component pre-fixing until the hardening of the adhesive connection (9) simultaneously serves to fix at least one add-on part (12, 16) and/or assembly to the frame longitudinal beam (2) and/or to the frame longitudinal beam structure (1).

19. Frame longitudinal beam structure according to one of the preceding claims,
**characterized in that** the base profile (3) and/or the supplemental profiles (4, 5) are reinforced at defined regions, in particular at defined regions of the profile leg which projects away from the central web region, and/or is reinforced with at least one reinforcement element (11), in particular in the form of an area of doubled-up material.

20. Frame longitudinal beam structure according to Claim 19, **characterized in that** the reinforcement element (11) is formed by at least one separate component, in particular a strip-shaped and/or plate-shaped component, and/or **in that** the reinforcement element (11) is formed by a bent portion and/or flanged portion (17) of a free profile leg end region of a profile leg of the base profile (3) and/or of at least one supplemental profile (4, 5), and/or **in that** the reinforcement element (11) is formed integrally by regions of different thickness, which are in particular rolled, of the respective profile component.

21. Frame longitudinal beam structure according to one of the preceding claims,
**characterized in that** the base profile (3) and at least one of the supplemental profiles (4, 5) and/or at least a part of the supplemental profiles (4, 5) have different material thicknesses than one another, in particular a material thickness of less than 12 mm, and/or are produced from different materials and/or with different strengths.

22. Utility vehicle, in particular truck or omnibus, having a frame longitudinal beam structure (1) according to one of the preceding claims.

23. Method for producing a frame longitudinal beam for a frame longitudinal beam structure, in particular for producing a frame longitudinal beam structure according to one of Claims 1 to 21, having at least one frame longitudinal beam (2) of modular construction which extends in the vehicle longitudinal direction when in the mounted state,
**characterized**
**in that** the frame longitudinal beam (2) has a base profile (3) which extends over the entire length of the frame longitudinal beam (2), to which base profile (3) at least one supplemental profile (4, 5) formed by a separate component is attached in areal abutting connection,
**in that** the base profile (3) has a plate-shaped central web (3a) which, as viewed in cross section, extends between opposite frame longitudinal beam regions, which central web (3a) runs rectilinearly as viewed in the direction of the longitudinal extent of the base profile, and to which central web (3a) supplemental profiles (4, 5) formed by separate components are attached in areal abutting connection,
**in that** a plurality of supplemental profiles (4, 5) are attached to the central web (3a), which runs rectilinearly and over the entire length of the frame longitudinal beam (2), of the base profile (3) such that, in the direction of extent of the longitudinal beam, at least two frame longitudinal beam regions (6, 7, 8) of different frame longitudinal beam profile cross section are formed,
**in that** at least the central web (3a) of the base profile (3) which extends in the direction of the frame longitudinal beam is formed without an offset in the vertical axis direction and/or without a kink transversely with respect to the direction of the frame longitudinal beam, and
**in that** the at least one supplemental profile (4, 5) is connected to the base profile (3) by means of an adhesive connection (9) and additionally by means of at least one non-positively locking and/or positively locking connection, wherein the components to be connected to one another are aligned and/or pre-fixed in a positionally accurate manner by means of the at least one non-positively locking and/or positively locking connection until the hardening of the adhesive connection (9) takes place.

24. Method according to Claim 23, **characterized in that** the hardening of the adhesive connection (9) is carried out during the course of an electrochemical coating process, in particular a cathodic dip painting process, of the frame longitudinal beam (2).

25. Method according to Claim 23 or 24, **characterized in that** the at least one non-positively locking and/or positively locking connection (10) which permits the component pre-fixing and/or alignment simultaneously serves to fix at least one add-on part (12, 16) and/or assembly to the frame longitudinal beam (2) or to the frame longitudinal beam structure (1).

26. Method according to one of Claims 23 to 25, **characterized in that** the components to be connected to one another are connected by means of an areal adhesive connection (9), preferably by means of an adhesive connection (9) which covers substantially the entire abutment and connecting region of the components to be connected to one another with a defined adhesive layer thickness, and/or which fills out a defined gap spacing between the components to be connected to one another.

## Revendications

1. Structure de longeron de châssis pour cadre de dispositifs de roulement de véhicules utilitaires, notamment de poids lourds et/ou de bus, avec au moins un longeron de châssis (2) à structure modulaire s'étendant à l'état monté dans la direction longitudinale du véhicule, **caractérisée en ce que** :
le longeron de châssis (2) comporte un profilé de base (3) s'étendant sur toute la longueur du longeron de châssis (2) avec un étai central (3a) en forme de plaque et s'étendant entre des zones de longeron de châssis opposées vues en section transversale, ledit étai central (3a) s'étendant en ligne droite, vu dans la direction d'extension longitudinale du profilé de base, et des profilés complémentaires (4, 5) formés par des composants séparés étant raccordés à l'étai central (3a) dans une liaison d'appui plane ;
plusieurs profilés complémentaires (4, 5) sont raccordés de telle sorte à l'étai central (3a) du profilé de base (3) s'étendant en ligne droite et sur toute la longueur du longeron de châssis (2) que dans la direction d'extension du longeron, au moins deux zones de longeron de châssis (6, 7, 8) sont réalisées avec une section transversale de profilé de longeron de châssis différente ; et
au moins l'étai central (3a) du profilé de base (3) s'étendant dans la direction de longeron de châssis est réalisé sans un coude dans la direction de l'axe vertical et sans pliure transversalement à la direction de longeron de châssis.

2. Structure de longeron de châssis selon la revendication 1, **caractérisée en ce que** de façon préférée, la totalité du profilé de base (3) est réalisée sous la forme d'un composant de profilé non coudé et non plié et s'étendant ainsi en ligne droite dans la direction de longeron de châssis.

3. Structure de longeron de châssis selon l'une quelconque des revendications précédentes, **caractérisée en ce qu'**au moins l'étai central (3a) du profilé de base (3), de façon préférée la totalité du profilé de base (3), présente une section transversale de profilé en principe toujours égale vue dans la direction d'extension et/ou que l'étai central (3), de préférence à l'extérieur de la zone de raccordement des profilés complémentaires (4, 5), est pourvue, en des endroits définis, d'au moins un renforcement (11a) de type moulure et/ou d'un bombement et/ou d'au moins un creux.

4. Structure de longeron de châssis selon l'une quelconque des revendications précédentes, **caractérisée en ce que** les profilés complémentaires (4, 5) sont raccordés sur le même côté vu transversalement à la direction de longeron de châssis ou sur différents côtés de l'étai central (3a) du profilé de base (3) dans une liaison d'appui plane et/ou que les profilés complémentaires (4, 5) sont raccordés à différentes hauteurs à l'étai central (3a) du profilé de base (3) dans une liaison d'appui plane et/ou que les profilés complémentaires (4, 5) sont raccordés à l'étai central (3a) du profilé de base (3) de façon décalée d'un angle défini par rapport à la direction d'extension longitudinale de profilé complémentaire et à la direction d'extension longitudinale du profilé de base, dans une liaison d'appui plane.

5. Structure de longeron de châssis selon l'une quelconque des revendications précédentes, **caractérisée en ce qu'**au moins le flanc de profilé des profilés complémentaires (4, 5) raccordé à l'étai central (3a) du profilé de base (3) est réalisé sans un coude dans la direction de l'axe vertical et/ou sans pliure transversalement à la direction de longeron de châssis et de façon préférée, la totalité du profilé complémentaire (4, 5) est réalisée sous la forme d'un composant de profilé non coudé et non plié et s'étendant ainsi en ligne droite.

6. Structure de longeron de châssis selon l'une quelconque des revendications précédentes, **caractérisée en ce qu'**au moins le flanc de profilé du profilé complémentaire (4, 5) respectif raccordé à l'étai central (3a) du profilé de base (3) et de façon préférée la totalité du profilé complémentaire (4, 5) présente une section transversale de profilé en principe toujours égale vue dans la direction d'extension longitudinale et/ou que le profilé complémentaire (4, 5), est pourvu de préférence à l'extérieur de la zone de raccordement, au niveau de l'étai central (3a) du profilé de base (3), en des endroits définis, d'au moins un renforcement de type moulure et/ou d'un bombement et/ou d'au moins un creux.

7. Structure de longeron de châssis selon l'une quelconque des revendications précédentes, **caractérisée en ce que** le profilé de base (3) présente une telle section transversale de profilé avec au moins un flanc de profilé (3a) saillant au moins en partie en angle par rapport à l'étai central (3a) et pouvant être complété à l'aide des profilés complémentaires (4, 5) pour former une section transversale de profilé présentant ou incluant une forme de Z ou une forme de C.

8. Structure de longeron de châssis selon l'une quelconque des revendications précédentes, **caractérisée en ce que** le profilé de base (3) est complété au moins dans une zone de châssis de longeron (6) par rapport à la direction de conduite, du côté avant ou du côté arrière avec au moins un profilé complémentaire (4) pour former une section transversale de profilé présentant ou incluant une forme de Z.

9. Structure de longeron de châssis selon l'une quelconque des revendications précédentes, **caractérisée en ce que** le profilé de base (3) est complété, au moins dans une zone de châssis de longeron (7) du côté avant ou du côté arrière par rapport à la direction de conduite, avec au moins un profilé complémentaire (5) pour former une section transversale de profilé présentant ou incluant une forme de C, de façon préférée avec des flancs de profilé (3a, 5a) orientés vers l'intérieur à l'état monté dans la direction de véhicule transversale.

10. Structure de longeron de châssis selon l'une quelconque des revendications précédentes, **caractérisée en ce que** le profilé de base (3) présente une section transversale de profilé en forme de L ou en forme de C ou en forme de E ou en forme de T et/ou que les profilés complémentaires (4, 5) présentent une section transversale de profilé identique ou différente par rapport aux profilés complémentaires (4, 5) et/ou par rapport au profilé de base (4, 5), et/ou que les profilés complémentaires (4, 5) présentent une section transversale de profilé en forme de L ou de C ou de E.

11. Structure de longeron de châssis selon l'une quelconque des revendications précédentes, **caractérisée en ce que** les profilés complémentaires (4, 5) se chevauchent au moins en partie les uns les autres dans une zone de châssis de longeron (3) centrale reposant entre des zones de châssis de longeron (5, 7) du côté avant et du côté arrière, vues dans la direction de longeron de châssis, de préférence au moins en partie sur les côtés opposés de l'étai central (3a).

12. Structure de longeron de châssis selon la revendication 11, **caractérisée en ce que** les profilés complémentaires (4, 5) raccordés sur les côtés opposés de l'étai central (3a), vus dans la direction de l'axe vertical, ressortent de telle sorte vers le haut ou vers le bas au-delà de l'étai central (3a) que les profilés complémentaires (4, 5) reposent les un et les autres dans la zone chevauchement (8) des profilés complémentaires (4, 5), contre respectivement un de leurs flancs de profilé (4b, 5b), dans une liaison d'appui plane et/ou que les autres flancs de profilé (4a, 5a) des profilés complémentaires (4, 5) soient orientés dans la direction opposée par rapport à l'étai central (3a).

13. Structure de longeron de châssis selon la revendication 12, **caractérisée en ce qu'**au moins un des profilés complémentaires (5) est pourvu, dans la zone de transition en direction de la zone de flanc de profilé (14) ressortant de la zone de transition, d'une pliure et/ou d'un recourbement (13) tels que la zone de flanc de profilé (14) ressortant de l'étai central (3a) soit décalée d'un certain tronçon de décalage défini, notamment d'au moins une partie de l'épaisseur de paroi de l'étai central (3a), par rapport à la zone de flanc de profilé raccordée à l'étai central (3a), en direction de la zone de flanc de profilé de l'autre profilé complémentaire (4) associé.

14. Structure de longeron de châssis selon l'une quelconque des revendications précédentes, **caractérisée en ce que** le profilé de base (3) est réalisé d'un seul tenant, notamment d'un seul tenant et/ou avec une unité de matériaux.

15. Structure de longeron de châssis selon l'une quelconque des revendications précédentes, **caractérisée en ce que** les profilés complémentaires (4, 5) sont reliés au profilé de base (3) par complémentarité de matières, notamment au moyen d'une liaison collée (9), et/ou par complémentarité de formes et/ou de forces, notamment à l'aide d'au moins une liaison vissée (10).

16. Structure de longeron de châssis selon la revendication 15, **caractérisée en ce que** les composants (3, 4, 5) à relier entre eux sont reliés au moyen d'une liaison collée (9) plate, de préférence au moyen d'une liaison collée (9) recouvrant pour l'essentiel la totalité de la zone d'appui et de liaison des composants à relier entre eux avec une épaisseur de colle définie et/ou remplissant un interstice défini entre les composants à relier entre eux (3, 4,5).

17. Structure de longeron de châssis selon la revendication 16, **caractérisée en ce que** les composants à relier entre eux (3, 4, 5) sont en outre reliés dans la zone de liaison collée à l'aide d'au moins une liaison par complémentarité de formes et/ou de forces (10) entraînant une préfixation des composants avant le durcissement de la liaison collée, notamment au moins une liaison rivetée et/ou vissée.

18. Structure de longeron de châssis selon la revendication 17, **caractérisée en ce qu'**au moins un élément (12, 16) et/ou un groupe est fixé simultanément au longeron de châssis (2) ou à la structure de longeron de châssis (1) à l'aide de l'au moins une liaison (10) par complémentarité de formes et/ou de forces permettant la préfixation des composants jusqu'au durcissement de la liaison collée (9).

19. Structure de longeron de châssis selon l'une quelconque des revendications précédentes, **caractérisée en ce que** le profilé de base (3) et/ou les profilés complémentaires (4, 5) sont renforcés au niveau de zones définies, notamment au niveau de zones définies du flanc de profilé s'écartant de la zone d'étai central et/ou est renforcé avec au moins un élément de renforcement (11), notamment au sens d'un doublage de matériau.

20. Structure de longeron de châssis selon la revendication 19, **caractérisée en ce que** l'élément de renforcement (11) est formé par au moins un composant séparé, notamment un composant en forme de bande et/ou de plaque, et/ou que l'élément de renforcement (11) est réalisé par le biais d'un recourbement et/ou d'un bordage (17) d'une zone d'extrémité de flanc de profilé libre d'un flanc de profilé du profilé de base (3) et/ou d'au moins un profilé complémentaire (4, 5) et/ou que l'élément de renforcement (11) est réalisé intégralement par le biais de zones d'épaisseurs différentes, notamment laminées, du composant de profilé respectif.

21. Structure de longeron de châssis selon l'une quelconque des revendications précédentes, **caractérisée en ce que** le profilé de base (3) et au moins un des profilés complémentaires (4, 5) et/ou au moins une partie des profilés complémentaires (4, 5) présentent entre autres une épaisseur de matériau différente, notamment une épaisseur de matériau inférieure à 12 mm et/ou sont fabriqués à partir d'un matériau différent et/ou avec une solidité différente.

22. Véhicule utilitaire, notamment poids lourd ou omnibus, avec une structure de longeron de châssis (1) selon l'une quelconque des revendications précédentes.

23. Procédé de fabrication d'un longeron de châssis pour une structure de longeron de châssis, notamment de fabrication d'une structure de longeron de châssis selon l'une quelconque des revendications 1 à 21, avec au moins un longeron de châssis (2) à structure modulaire s'étendant à l'état monté dans la direction longitudinale du véhicule, **caractérisé en ce que** :
le longeron de châssis (2) comporte un profilé de base (3) s'étendant sur toute la longueur du longeron de châssis (2) au niveau duquel au moins un profilé complémentaire (4, 5) formé par un composant séparé est raccordé dans une liaison d'appui plane ;
le profilé de base (3) comporte un étai central (3a) en forme de plaque et s'étendant entre des zones de longeron de châssis opposées, vues en section transversale, ledit étai central (3a) s'étendant en ligne droite, vu dans la direction d'extension longitudinale du profilé de base, et des profilés complémentaires (4, 5) formés par des composants séparés étant raccordés à l'étai central (3a) dans une liaison d'appui plane ;
plusieurs profilés complémentaires (4, 5) sont raccordés de telle sorte à l'étai central (3a) du profilé de base (3) s'étendant en ligne droite et sur toute la longueur du longeron de châssis (2) que dans la direction d'extension du longeron, au moins deux zones de longeron de châssis (6, 7, 8) sont réalisées avec une section transversale de profilé de longeron de châssis différente ;
au moins l'étai central (3a) du profilé de base (3) s'étendant dans la direction de longeron de châssis est réalisé sans un coude dans la direction de l'axe vertical et sans pliure transversalement à la direction de longeron de châssis ; et
l'au moins un profilé complémentaire (4, 5) est relié au profilé de base (3) au moyen d'une liaison collée (9) et en sus à l'aide d'au moins une liaison réalisée par complémentarité de forces et/ou de formes, les composants à relier entre eux étant alignés et/ou préfixés à un emplacement précis jusqu'au durcissement de la liaison collée (9) à l'aide de l'au moins une liaison réalisée par complémentarité de forces et/ou de formes.

24. Procédé selon la revendication 23, **caractérisé en ce que** le durcissement de la liaison collée (9) est réalisé dans le châssis d'un processus de revêtement électrochimique, notamment d'un dépôt de sous-couche par électrolyse, du longeron de châssis (2).

25. Procédé selon la revendication 23 ou 24, **caractérisé en ce qu'**au moins un élément (12, 16) et/ou un groupe est fixé simultanément au longeron de châssis (2) ou à la structure de longeron de châssis (1) à l'aide de l'au moins une liaison (10) par complémentarité de formes et/ou de forces permettant la préfixation et/ou l'orientation des composants jusqu'au durcissement de la liaison collée (9).

26. Procédé selon l'une quelconque des revendications 23 à 25, **caractérisé en ce que** les composants à relier entre eux sont reliés au moyen d'une liaison collée (9) plate, de préférence au moyen d'une liaison collée (9) recouvrant pour l'essentiel la totalité de la zone d'appui et de liaison des composants à relier entre eux avec une épaisseur de colle définie et/ou remplissant un interstice défini entre les composants à relier entre eux (3, 4, 5).
